# EUROPEAN PATENT SPECIFICATION

(11) **EP 4 064 664 B1**
(45) Date of publication and mention of the grant of the patent: **25.09.2024**
(21) Application number: 20904366.0
(22) Date of filing: 15.12.2020
(51) Int. Cl.: H04R 1/28, H04R 1/02, H04R 9/06, H04R 9/02, H04M 1/18, H04M 1/03

(54) **LOUDSPEAKER MODULE AND ELECTRONIC DEVICE**
LAUTSPRECHERMODUL UND ELEKTRONISCHE VORRICHTUNG
MODULE DE HAUT-PARLEUR ET DISPOSITIF ÉLECTRONIQUE

(30) Priority: 25.12.2019 CN 201911359802
(43) Date of publication of application: 28.09.2022
(73) Proprietor: Huawei Technologies Co., Ltd., Shenzhen, Guangdong 518129 (CN)
(72) Inventor: FENG, Lu, Shenzhen, Guangdong 518129 (CN); LIU, Yang, Shenzhen, Guangdong 518129 (CN); LI, Shizhe, Shenzhen, Guangdong 518129 (CN); CHANG, Jing, Shenzhen, Guangdong 518129 (CN); LI, Yunhai, Shenzhen, Guangdong 518129 (CN)
(74) Representative: Pfenning, Meinig & Partner mbB
(86) International application number: PCT/CN2020/136424
(87) International publication number: WO 2021/129456

(56) References cited:
- CN-A- 106 686 505
- CN-A- 108 055 601
- CN-A- 108 551 638
- CN-A- 108 810 769
- CN-A- 109 874 067
- CN-A- 110 381 399
- US-A1- 2007 221 489

## Description

### TECHNICAL FIELD

This application relates to the field of sounding technologies, and in particular, to a speaker module and an electronic device.

### BACKGROUND

Document CN 108 810 769 A discloses a loudspeaker module. The loudspeaker module comprises a shell and a loudspeaker monomer; and the loudspeaker monomer is contained in the shell, and has a vibrating diaphragm.

Document CN 110 381 399 A discloses a loudspeaker box. The loudspeaker box comprises an upper cover, a lower cover and a single sound production unit. The lower cover and the upper cover enclose an accommodating space. The single sound production unit is arranged in the accommodating space.

Document CN 108 551 638 A discloses a speaker module and electronic equipment. The module comprises a shell and a sounding device located in an inner cavity of the shell.

Existing terminal products such as a mobile phone and a tablet computer has a high waterproof level, and overall internal air tightness is good. Atmospheric pressure of a rear sound cavity of a speaker module easily changes due to factors such as holding a terminal by a user. Consequently, a location of a diaphragm in the speaker module is shifted, and sound quality of the speaker module is affected.

### SUMMARY

An objective of this application is to provide a speaker module and an electronic device, to balance atmospheric pressure of front and rear sound cavities in the speaker module and improve sound quality of the speaker module.

The above problems are solved by the subject-matter according to the independent claim. Advantageous embodiments are set out in the dependent claims. A speaker module in this application includes a first enclosure, a speaker core, and a waterproof breathable film. The first enclosure is provided with an accommodating groove, the speaker core is mounted on the accommodating groove, the speaker core includes a sound diaphragm, a front sound cavity is formed between the sound diaphragm and the first enclosure, a rear sound cavity is on a side that is of the sound diaphragm, and the side that is of the sound diaphragm is away from the front sound cavity.

The first enclosure is further provided with a resonant groove, a bottom of the resonant groove is provided with a communicating hole, the resonant groove communicates with the front sound cavity through the communicating hole, and the waterproof breathable film covers an opening that is of the resonant groove and that faces the rear sound cavity, to isolate the resonant groove from the rear sound cavity.

The waterproof breathable film covers the opening that is of the resonant groove and that faces the rear sound cavity, and the waterproof breathable film and the resonant groove form, through enclosing, a resonant cavity that communicates with the front sound cavity. Additionally, the first enclosure is further provided with a groove, an opening of the groove is located on a bottom wall surface of the accommodating groove; the sound diaphragm comprises a dome and a diaphragm bearing the dome, and the dome directly faces the groove; the dome is in a rectangular plate shape; and the diaphragm is in a rectangular ring shape.

Compared with an existing speaker module, in the speaker module in this application, the waterproof breathable film separates the front sound cavity and the rear sound cavity. When the speaker module does not work, air may flow between the front sound cavity and the rear sound cavity through the waterproof breathable film. In this case, the rear sound cavity and the front sound cavity are connected, atmospheric pressure between the front sound cavity and the rear sound cavity is always balanced, and a position of the sound diaphragm in the speaker module is not shifted. Compared with sound quality of the existing speaker module, sound quality of the speaker module in this application is improved.

When the speaker module works, the sound diaphragm of the speaker core drives air in the front sound cavity and the rear sound cavity to vibrate. An air flow speed generated when the air in the front sound cavity and the rear sound cavity vibrates is far greater than air permeability of the waterproof breathable film. The waterproof breathable film approximately isolates the front sound cavity from the rear sound cavity. This can effectively prevent air flowing between the front sound cavity and the rear sound cavity from affecting a volume of a sound made by the speaker module. In this case, the resonant cavity communicates with only the front sound cavity, and the resonant cavity and the front sound cavity form a Helmholtz resonator (Helmholtz resonators) having a resonance frequency. According to a Helmholtz resonance (Helmholtz resonance) principle, the resonant cavity forms an anti-resonance peak at a high-frequency resonance peak of the front sound cavity, to weaken a peak value of the speaker module at the high-frequency resonance peak. This effectively reduces the peak value of the high-frequency resonance peak and high-frequency sensitivity, improves flatness of a high-frequency response of the speaker module, avoids phenomena of high-frequency sharpness and a heavy labiodental sound of the speaker module, and improves sound quality of the speaker module.

The first enclosure includes a bottom wall and a first side wall connected to the bottom wall, and the bottom wall and the first side wall form the accommodating groove through enclosing.

The first enclosure further includes a second side wall connected to the bottom wall, the second side wall is connected to the first side wall, and the second side wall and the bottom wall form the resonant groove through enclosing.

The speaker core is a moving coil speaker core or a piezoelectric speaker core.

In an implementation, the first enclosure is provided with a sound outlet hole, and the sound outlet hole connects the front sound cavity and the outside of the speaker module, so that when the speaker core vibrates, a sound made by the front sound cavity is transmitted to the outside of the speaker module through the sound outlet hole. In this way, the speaker module makes a sound.

In an implementation, a ratio of a volume of the resonant groove to a volume of the communicating hole is between 5 and 20, to ensure that the volume of the resonant groove is large enough to form the resonant cavity having a volume with the waterproof breathable film, so that the resonant cavity can reduce loudness at a high frequency when the speaker module works, reduce harshness caused by high-frequency resonance, and improve acoustic performance of the speaker module.

In an implementation, air permeability of the waterproof breathable film is between 100 ml/min and 200 ml/min. That is, in one minute, 100 ml to 200 ml air is allowed to pass through the waterproof breathable film. When the speaker module does not work, an air flow rate between the front sound cavity and the rear sound cavity is between 100 ml/min and 200 ml/min, to quickly and effectively balance atmospheric pressure between the front sound cavity and the rear sound cavity.

In an implementation, an opening through which the communicating hole communicates the resonant groove is partially located on a bottom wall surface of the resonant groove, and is partially located on a side wall surface of the resonant groove. That is, the opening through which the communicating hole communicates with the resonant groove is partially located on a surface that is of the bottom wall and that faces the resonant groove, and is partially located on a surface that is of the second side wall and that faces the resonant groove, to ensure a sufficient volume of the communicating hole and a proper air flow rate between the resonant groove and the front sound cavity.

The first enclosure is further provided with a groove, and an opening of the groove is located on a bottom wall surface of the accommodating groove. In other words, the opening of the groove is located on a surface that is of the bottom wall and that faces the accommodating groove, and the groove is concave from the bottom wall surface of the accommodating groove to a direction away from the opening of the accommodating groove. The sound diaphragm includes a dome and a diaphragm bearing the dome. The dome directly faces the groove, to increase vibration space between the dome and the first enclosure, and increase utilization of space between a surround part of the diaphragm and the first enclosure, that is, increase utilization of space between the surround part and the bottom wall surface of the accommodating groove. This helps increase vibration amplitude of the sound diaphragm and improve audio performance of a sound made by the speaker module.

The dome directly facing the groove means that an orthographic projection of the dome on the bottom wall surface of the accommodating groove is located in the opening of the groove. That is, when the sound diaphragm vibrates, the dome may partially or completely extend into the groove.

In an implementation, the diaphragm includes a first fastening part bearing the dome and the surround part connected to the first fastening part. A distance between the dome and a bottom wall surface of the groove is equal to or greater than a distance between the surround part and the bottom wall surface of the accommodating groove, so that when vibration space between the dome and the first enclosure is fully used, vibration space between the surround part and the first enclosure can also be fully used. This helps increase vibration amplitude of the sound diaphragm, and improve audio performance of a sound made by the speaker module.

In an implementation, an opening of the sound outlet hole is located on the bottom wall surface of the groove, and the sound outlet hole extends from the bottom wall surface of the groove to a direction away from the opening of the groove, so that a sound made by the front sound cavity when the speaker core works is directly transmitted to the outside of the speaker module through the sound outlet hole. A sound guide pipe does not need to be designed to transmit a sound generated by the front sound cavity to the outside of the speaker module. This helps improve sound quality of the speaker module, and improve acoustic performance of the speaker module.

In an implementation, the speaker module further includes a second enclosure. The second enclosure covers the first enclosure, and forms a sound cavity with the first enclosure through enclosing. The speaker core is located between the first enclosure and the second enclosure. The rear sound cavity is formed between the sound diaphragm and the second enclosure.

Compared with a rear sound cavity formed between the sound diaphragm and another component outside the speaker module, in the speaker module in this implementation, a sealing level of the rear sound cavity formed between the sound diaphragm and the second enclosure is higher, to ensure effective sealing of the rear sound cavity, and improve sound quality of the speaker module.

In the speaker module in this implementation, the rear sound cavity is connected to the front sound cavity through the waterproof breathable film only when the speaker module does not work. Atmospheric pressure outside the speaker module does not affect atmospheric pressure in the rear sound cavity, and does not affect atmospheric pressure balance between the front sound cavity and the rear sound cavity. Therefore, a position of the sound diaphragm in the speaker module is not shifted, and normal working of the speaker module is not affected. This helps improve sound quality of the speaker module. In addition, the second enclosure and the first enclosure form a modular structure. The second enclosure and the first enclosure can not only fully protect the speaker core located between the second enclosure and the first enclosure, but also help simplify assembly of the speaker module and other components.

An example further provides a speaker module. The speaker module includes a first enclosure and a speaker module. The first enclosure is provided with an accommodating groove, the speaker core is mounted on the accommodating groove, the speaker module core includes a sound diaphragm, a front sound cavity is formed between the sound diaphragm and the first enclosure, and a rear sound cavity is on a side that is of the sound diaphragm and that is away from the front sound cavity.

The first enclosure is further provided with a groove, and an opening of the groove is located on a bottom wall surface of the accommodating groove. The sound diaphragm includes a dome and a diaphragm bearing the dome. The dome directly faces the groove, to increase vibration space between the dome and the first enclosure, and increase utilization of space between a surround part of the diaphragm and the first enclosure, that is, increase utilization of space between the surround part and the bottom wall surface of the accommodating groove. This helps increase vibration amplitude of the sound diaphragm and improve audio performance of a sound made by the speaker module.

An electronic device in this application includes a housing and any one of the foregoing speaker modules, and the speaker module is accommodated in the housing.

In the electronic device in this application, because sound quality of the speaker module is good, sound quality of the electronic device is good.

The housing is provided with a speaker hole. The speaker hole connects the sound outlet hole of the speaker module and the outside of the electronic device. When the speaker core works, a sound of the front sound cavity is transmitted to the outside of the electronic device through the sound outlet hole and the speaker hole in sequence, so that the electronic device makes a sound.

In an implementation, the housing includes an enclosure and a screen. The screen is mounted on the enclosure, and forms an overall inner cavity with the enclosure. To be specific, inside the housing, the speaker hole is disposed on the enclosure and is used as a loudspeaker hole. That is, the speaker module is used by the electronic device for making a sound by a speaker. Alternatively, the speaker hole is disposed on the screen and is used as a receiver hole. That is, the speaker module is used by the electronic device for making a sound by a receiver.

In an implementation, the housing includes a mounting surface, the housing is provided with a mounting groove, an opening of the mounting groove is located on the mounting surface, and the first enclosure is partially accommodated in the mounting groove. A part that is of the first enclosure and that forms the groove is accommodated in the mounting groove, to increase vibration space between the dome and the first enclosure, increase vibration amplitude of the sound diaphragm, and improve audio performance of the electronic device without increasing a thickness of the electronic device.

In an implementation, the electronic device further includes a support, the support is accommodated in the housing, the support includes an assembly surface, the support is provided with an assembly groove, an opening of the assembly groove is located on the assembly surface, and the first enclosure is partially accommodated in the assembly groove. A part that is of the first enclosure and that forms the groove is accommodated in the assembly groove, to increase vibration space between the dome and the first enclosure, increase vibration amplitude of the sound diaphragm, and improve audio performance of the electronic device without increasing a thickness of the electronic device.

In an implementation, the assembly groove penetrates through the support in a thickness direction of the support, and communicates with the speaker hole of the housing.

In an implementation, the assembly surface partially protrudes to form a limiting frame, and the limiting frame is disposed around the assembly groove and abuts against a circumferential surface of the speaker module, to assist in fastening the speaker module and improve assembly stability of the speaker module in the housing.

### BRIEF DESCRIPTION OF DRAWINGS

To describe technical solutions in embodiments of this application or in the background more clearly, the following describes the accompanying drawings used in embodiments of this application or in the background.
FIG. 1 is a schematic diagram of a structure of an electronic device according to an embodiment of this application;
FIG. 2 is a schematic diagram of a structure of a housing in the electronic device shown in FIG. 1;
FIG. 3 is a schematic diagram of a structure of a speaker module in the electronic device shown in FIG. 1;
FIG. 4 is a schematic diagram of an exploded structure of the speaker module shown in FIG. 3;
FIG. 5 is a schematic diagram of a structure of a first enclosure sectioned in an A-A direction in the speaker module shown in FIG. 4;
FIG. 6 is a schematic diagram of a structure of a first enclosure sectioned in a B-B direction in the speaker module shown in FIG. 4;
FIG. 7 is a schematic diagram of a structure of the speaker module shown in FIG. 3 sectioned in a C-C direction;
FIG. 8 is a schematic diagram of a structure of the speaker module shown in FIG. 3 sectioned in a D-D direction;
FIG. 9 is a schematic diagram of an exploded structure of a speaker core in the speaker module shown in FIG. 4;
FIG. 10 is a schematic diagram of an exploded structure of a magnetic circuit assembly in the speaker core shown in FIG. 9;
FIG. 11 is a schematic diagram of an assembly structure in which a central magnet, a first side magnet, and a second side magnet are mounted on a magnetic yoke in the magnetic circuit assembly shown in FIG. 10;
FIG. 12 is a schematic diagram of a structure of a magnetic circuit assembly in the speaker core shown in FIG. 9 from another angle;
FIG. 13 is a schematic diagram of an assembly structure in which a magnetic circuit assembly in the speaker core shown in FIG. 9 is mounted on a support assembly;
FIG. 14 is a schematic diagram of a structure of the assembly structure shown in FIG. 13 sectioned in an E-E direction;
FIG. 15 is a schematic diagram of an exploded structure of a vibration assembly in the speaker core shown in FIG. 9;
FIG. 16 is a schematic diagram of a structure of a vibration assembly sectioned in an F-F direction in the speaker core shown in FIG. 9;
FIG. 17 is a schematic diagram of a structure of a speaker core sectioned in a G-G direction in the speaker module shown in FIG. 4;
FIG. 18 is a schematic diagram of emulation results of audio performance tests on a speaker module in the electronic device shown in FIG. 1 and an existing speaker module;
FIG. 19 is a schematic diagram of a structure of the electronic device shown in FIG. 1 sectioned in an H-H direction;
FIG. 20 is a schematic diagram of a structure of a housing in a second electronic device according to an embodiment of this application;
FIG. 21 is a schematic diagram of a structure of a speaker module sectioned in a C-C direction in a second electronic device according to an embodiment of this application;
FIG. 22 is a schematic diagram of a partial structure of the second electronic device sectioned in an H-H direction according to an embodiment of this application;
FIG. 23 is a schematic diagram of a structure of a third electronic device according to an embodiment of this application;
FIG. 24 is a schematic diagram of a structure of a support in the electronic device shown in FIG. 23;
FIG. 25 is a schematic diagram of a partial structure of the electronic device shown in FIG. 23 sectioned in an I-I direction;
FIG. 26 is a schematic diagram of an exploded structure of a speaker module in the electronic device shown in FIG. 23;
FIG. 27 is a schematic diagram of an exploded structure of a speaker core in the speaker module shown in FIG. 26;
FIG. 28 is a schematic diagram of an exploded structure of a magnetic circuit assembly in the speaker core shown in FIG. 27;
FIG. 29 is a schematic diagram of an assembly structure in which a central magnet and first side magnets shown in FIG. 28 are mounted on a magnetic yoke;
FIG. 30 is a schematic diagram of an assembly structure in which a magnetic circuit assembly in the speaker core shown in FIG. 27 is mounted on a support assembly;
FIG. 31 is a schematic diagram of a structure of the assembly structure shown in FIG. 30 sectioned in a J-J direction;
FIG. 32 is a schematic diagram of an exploded structure of a vibration assembly in the speaker core shown in FIG. 27;
FIG. 33 is a schematic diagram of a structure of the vibration assembly shown in FIG. 27 sectioned in a K-K direction; and
FIG. 34 is a schematic diagram of a structure of a speaker core sectioned in an L-L direction in the speaker module shown in FIG. 26.

### DESCRIPTION OF EMBODIMENTS

The following describes embodiments of this application with reference to the accompanying drawings in embodiments of this application.

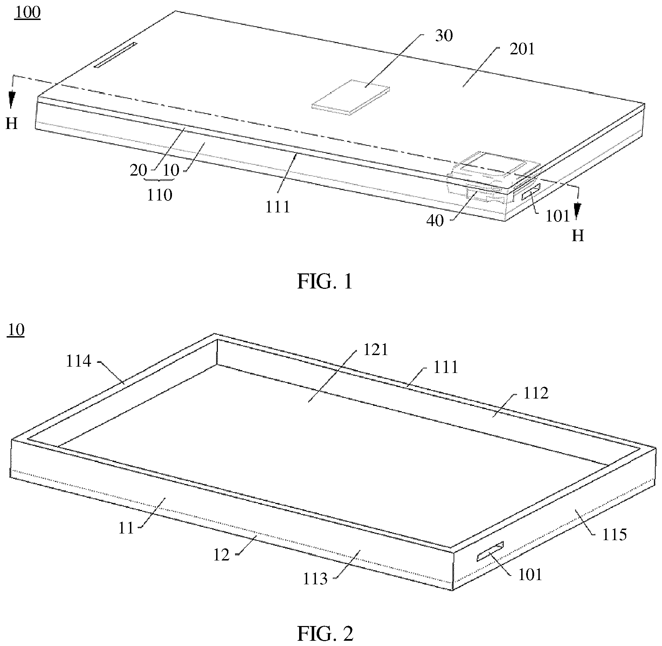

Refer to FIG. 1. FIG. 1 is a schematic diagram of a structure of an electronic device 100 according to an embodiment of this application.

The electronic device 100 may be a product having a sound emitting function, such as a mobile phone, a tablet computer, a camera, a multimedia player, an e-book reader, a personal computer, a notebook computer, a vehicle-mounted device, a wearable device, AR (Augmented Reality, augmented Reality) glasses, an AR helmet, VR (Virtual Reality, virtual reality) glasses, or a VR helmet. In the embodiment shown in FIG. 1, an example in which the electronic device 100 is the mobile phone is used for description.

The electronic device 100 includes a housing 110, a mainboard 30, and a speaker module 40. The housing 110 includes an enclosure 10 and a screen 20. The enclosure 10 is provided with a speaker hole 101. The screen 20 is mounted on the enclosure 10, and forms, with the enclosure 10, an overall inner cavity (not shown in the figure), that is, an interior of the housing 110. Both the mainboard 30 and the speaker module 40 are accommodated in the overall inner cavity. The speaker module 40 is electrically connected to the mainboard 30, receives an audio signal transmitted by the mainboard 30, and vibrates to make a sound based on the received audio signal. The sound is diffused to an external environment through the speaker hole 101, so that the electronic device 100 makes a sound. The speaker hole 101 is a loudspeaker hole. That is, the speaker module 40 is used by the electronic device 100 to make a sound by using a speaker.

FIG. 2 is a schematic diagram of a structure of the enclosure 10 in the electronic device 100 shown in FIG. 1.

The enclosure 10 includes a frame 11 and a rear cover 12. In this embodiment, the speaker hole 101 is disposed on the frame 11. Specifically, the frame 11 includes a top surface 111, and an inner surface 112 and an outer surface 113 that are connected to two sides of the top surface 111. That is, the top surface 111 is connected between the inner surface 112 and the outer surface. The inner surface 112 and the outer surface 113 are disposed back to back. An opening of the speaker hole 101 is located on the outer surface 113. The speaker hole 101 extends from the outer surface 113 to the inner surface 112, and penetrates through the inner surface 112. It should be noted that, in another embodiment, the speaker hole 101 may also be disposed on the rear cover 12. It should be understood that a shape of the speaker hole 101 is not limited to the squares shown in FIG. 1 and FIG. 2, and may also be a cylinder, a strip, or a hole.

In an implementation, the frame 11 is roughly of a square frame structure. The frame 11 includes an upper frame 114 and a lower frame 115 that are disposed opposite to each other, and the speaker hole 101 is disposed on the lower frame 115. When a user uses the electronic device 100, the upper frame 114 is placed approximately upward, and the lower frame 115 is placed approximately downward.

The rear cover 12 is located on a side that is of the frame 11 and that is away from the top surface 111. The rear cover 12 includes a mounting surface 121 that faces a same direction as the top surface 111. The rear cover 12 and the frame 11 are integrally formed, to improve stability of the structure of the electronic device 100. In this case, the frame 11 and the rear cover 12 may be made of a metal material. It may be understood that the rear cover 12 may also be detachably mounted on the frame 11, to facilitate maintenance and replacement of a component such as a battery, a memory card, or a camera in the electronic device 100. In this case, the frame 11 may be made of a metal alloy material such as titanium alloy or aluminum magnesium alloy. The rear cover 12 may be made of engineering plastic such as PC (polycarbonate, Polycarbonate) or ABS (acrylonitrile butadiene styrene copolymers, Acrylonitrile Butadiene Styrene copolymers), or metal alloy such as titanium alloy or aluminum-magnesium alloy.

In an implementation, the enclosure 10 may further include a middle plate. The middle plate is of a platelike structure. The middle plate may be formed on the frame 11 through an injection molding process, to form a middle frame of an integrated structure with the frame 11. In this case, the middle plate and the frame 11 are integrated, and this helps improve overall strength of the electronic device 100.

Refer to FIG. 1. The screen 20 is located on a side that is of the frame 11 and that is away from the rear cover 12. When the user uses the electronic device 100, the screen 20 is placed toward the user, and the rear cover 12 is placed away from the user. Specifically, the screen 20 is mounted on the mounting surface (not shown in the figure), and the screen 20 may be mounted on the mounting surface by bonding. The screen 20 includes a display surface 201 that is away from the frame 11, and the display surface 201 is configured to display an image, a video, and the like. It should be understood that, the screen 20 is not limited to a 2D (Dimensions, dimension) display shown in FIG. 1, or may be a 2.5D curved screen or a 3D curved screen.

In an implementation, the screen 20 includes a cover plate and a display panel fixed to the cover plate. The cover plate may be made of a transparent material such as glass. The display panel may be an LCD (Liquid Crystal Display, liquid crystal display), an OLED (Organic Light-Emitting Diode, organic light-emitting diode) display, or an AMOLED (Active-Matrix Organic Light-Emitting Diode, active-matrix organic light-emitting diode) display, an FLED (Flex Light-Emitting Diode, flex light-emitting diode) display, a mini LED, a micro LED, a micro OLED, QLED (Quantum Dot Light Emitting Diodes, quantum dot light emitting diodes), or the like. In addition, the display panel may be further integrated with a touch function. That is, the display panel is a touch display panel. In this case, the display panel is electrically connected to the mainboard 3040. The display panel can generate a touch signal, and transmit the touch signal to a main processor (not shown in the figure) on the mainboard 30. The main processor receives the touch signal, and controls enabling of an application (Application, App) in the electronic device 100 based on the touch signal.

The screen 20 and the rear cover 12 are located on two sides of the frame 11, and form the overall inner cavity with the frame 11 through enclosing. Components such as a battery, a memory card, and a camera may be accommodated in the overall inner cavity. As shown in FIG. 1, the frame 11, the rear cover 12, and the screen 20 form a roughly cuboid structure through enclosing.

The mainboard 30 is installed in the overall inner cavity. The mainboard 30 is further provided with a signal processor (not shown in the figure), and the signal processor is electrically connected to the main processor. In this embodiment, the main processor is a CPU (central processing unit, Central Processing Unit) of the electronic device 100, and the signal processor is a PA (power amplifier, Power Amplifier). The main processor sends an audio signal, and the signal processor receives the audio signal, and performs signal processing such as amplification and modification on the audio signal, to optimize the audio signal to be sent to the speaker module 40, improve sound quality of the speaker module 40, and improve audio performance of the electronic device 100.

The speaker module 40 is electrically connected to the signal processor. The speaker module is provided with a sound outlet hole (not shown in the figure). The speaker module 40 receives the audio signal processed by the signal processor, and vibrates to make a sound based on the audio signal. The sound is transmitted to the external environment through the sound outlet hole and the speaker hole 101 in sequence, so that the electronic device 100 makes a sound.

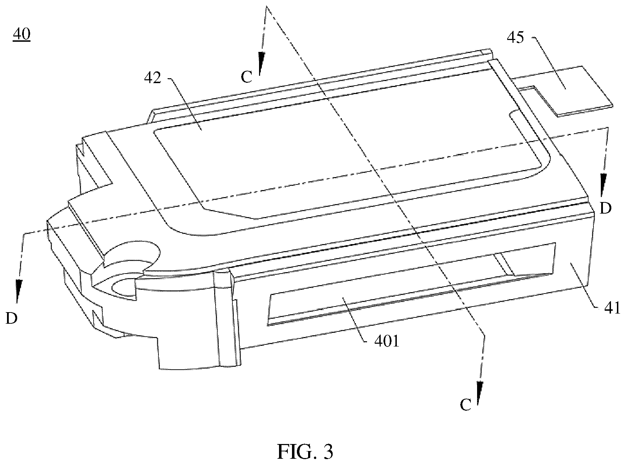

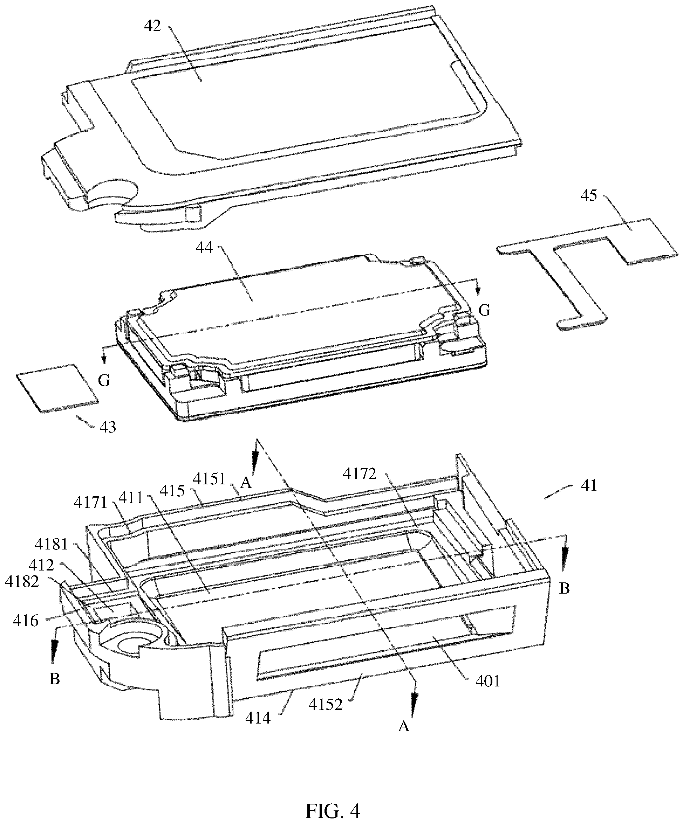

Refer to FIG. 3 and FIG. 4. FIG. 3 is a schematic diagram of a structure of the speaker module 40 in the electronic device 100 shown in FIG. 1. FIG. 4 is a schematic diagram of an exploded structure of the speaker module 40 shown in FIG. 3.

The speaker module 40 includes a first enclosure 41, a second enclosure 42, a waterproof breathable film 43, a speaker core 44, and a circuit board 45. A sound outlet hole 401 is disposed on the first enclosure 41. Specifically, the first enclosure 41 and the second enclosure 42 are fastened to each other, to form a sound cavity (not shown in the figure). Both the waterproof breathable film 43 and the speaker core 44 are accommodated in the sound cavity. A part of the circuit board 45 is located inside the sound cavity and is electrically connected to the speaker core 44, and the other part is located outside the sound cavity and is electrically connected to the signal processor, to transmit the audio signal processed by the signal processor to the speaker core 44. The speaker core 44 receives the audio signal processed by the signal processor, and drives, based on the audio signal, air in the sound cavity to vibrate to make a sound. The sound is transmitted to the outside of the sound cavity through the sound outlet hole 401, so that the speaker module 40 makes a sound.

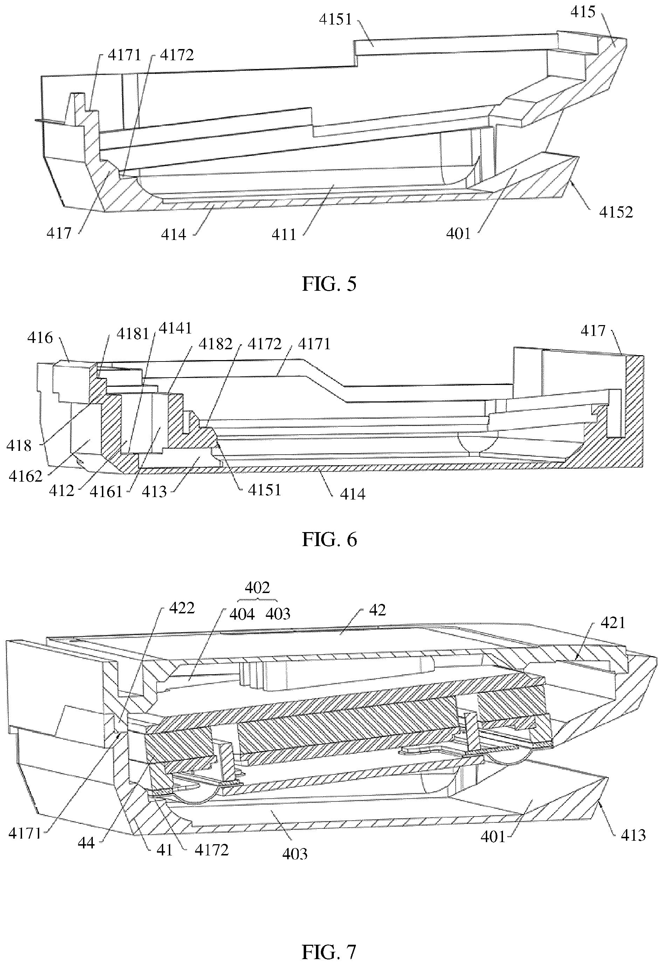

Refer to FIG. 4 and FIG. 5. FIG. 5 is a schematic diagram of a structure of the first enclosure sectioned in an A-A direction in the speaker module shown in FIG. 4. In the accompanying drawings of this application, "sectioning in the A-A direction" means sectioning along a plane in which a line A-A and arrows at two ends of the line A-A are located. The following descriptions of the accompanying drawings are understood in the same way.

The first enclosure 41 is provided with an accommodating groove 411 and a resonant groove 412. Specifically, the first enclosure 41 includes a bottom wall 414, and a first side wall 415 and a second side wall 416 that are connected to the bottom wall 414. The first side wall 415 and the bottom wall 414 form the accommodating groove 411 through enclosing. The first side wall 415 includes a first inner wall surface 4151 facing the accommodating groove 411 and a first outer wall surface 4152 facing away from the accommodating groove 411. The first inner wall surface 4151 partially protrudes to form a first step part 417. The first step part 417 includes a first step surface 4171 and a second step surface 4172 that face a same direction as an opening of the accommodating groove 411. The second step surface 4172 is located on a side that is of the first step surface 4171 and that is away from the first side wall 415. A height of the second step surface 4172 is less than a height of the first step surface 4171. It should be understood that a height used when the first enclosure 41 is described in this application is a height size in a direction perpendicular to the bottom wall 414 of the first enclosure 41.

The first inner wall surface 4151 is partially concave to form the sound outlet hole 401, and an opening of the sound outlet hole 401 is located on a side that is of the second step surface 4172 and that is away from the first step surface 4171. The sound outlet hole 401 extends from the first inner wall surface 4151 to the first outer wall surface 4152, and penetrates through the first outer wall surface 4152, to connect the accommodating groove 411 and the outside of the first enclosure 41. It should be understood that a shape of the sound outlet hole 401 is not limited to the square shown in FIG. 4, and may also be a cylinder or a strip.

Refer to FIG. 4 and FIG. 6. FIG. 6 is a schematic diagram of a structure of the first enclosure 41 sectioned in a B-B direction in the speaker module 40 shown in FIG. 4.

The second side wall 416 is connected to the first side wall 415, and the second side wall 416 and the bottom wall 414 form the resonant groove 412 through enclosing. The second side wall 416 includes a second inner wall surface 4161 facing the resonant groove 412 and a second outer wall surface 4162 facing away from the resonant groove 412. The second inner wall surface 4161 partially protrudes to form a second step part 418. The second step part 418 includes a third step surface 4181 and a fourth step surface 4182. The third step surface 4181 is connected to the first step surface 4171 to jointly bear the second enclosure 42 with the first step surface 4171. The fourth step surface 4182 is located on a side that is of the third step surface 4181 and that is away from the second side wall 416, and a height of the fourth step surface 4182 is less than a height of the third step surface 4181 and is greater than the height of the second step surface 4172. The first side wall 415 and the second side wall 416 may be integrally formed.

Abottom of the resonant groove 412 is provided with a communicating hole 413, and the resonant groove 412 communicates with the accommodating groove 414 through the communicating hole 413. Specifically, the communicating hole 413 extends in a direction from the bottom of the resonant groove 412 to the accommodating groove 411, and penetrates through the first inner wall surface 4151. An opening through which the communicating hole 413 communicates with the resonant groove 412 is partially located on a bottom wall surface of the resonant groove 412, and is partially located on a side wall surface of the resonant groove 412. That is, the opening through which the communicating hole 413 communicates with the resonant groove 412 is located at a joint of the second inner wall surface 4161 and a bottom wall surface 4141 of the bottom wall 414. That is, the opening through which the communicating hole 413 communicates with the resonant groove 412 is partially located on the second inner wall surface 4161, and is partially located on the bottom wall surface 4141 of the bottom wall 414, to ensure a sufficient volume of the communicating hole 413 and a proper air flow rate between the accommodating groove 411 and the resonant groove 412. A ratio V1/V2 of a volume V1 of the resonant groove 412 to a volume V2 of the communicating hole 413 is between 5 and 20, to limit an air flow rate in the communicating hole 413 and control an air exchange rate between the resonant groove 412 and the accommodating groove 411. It may be understood that the bottom wall surface of the resonant groove 412 is a part of the bottom wall surface 4141 of the bottom wall 414.

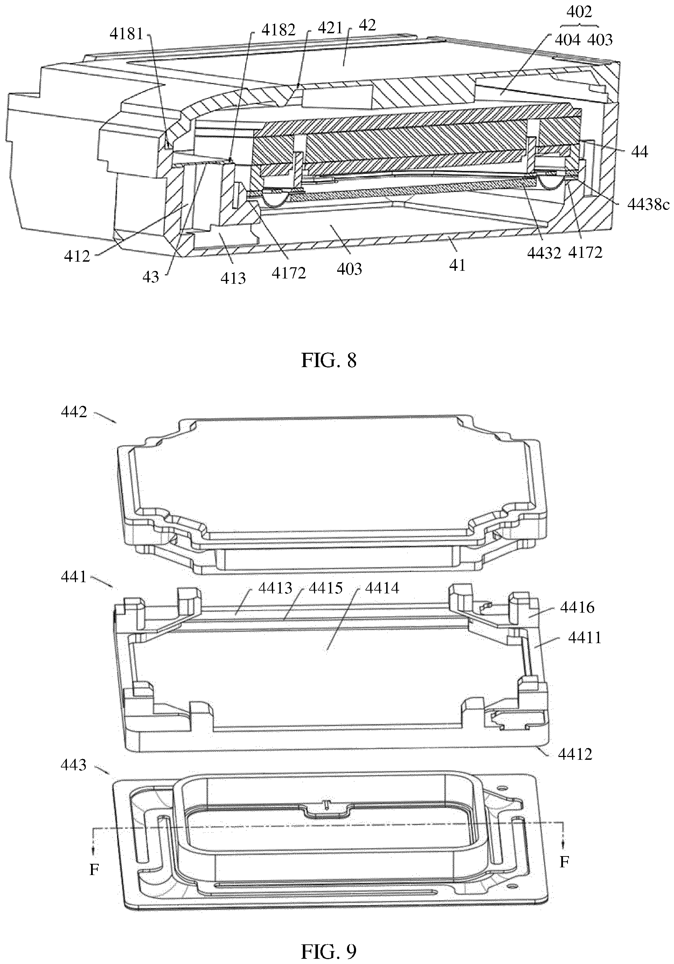

Refer to FIG. 7 and FIG. 8. FIG. 7 is a schematic diagram of a structure of the speaker module 40 shown in FIG. 3 sectioned in a C-C direction. FIG. 8 is a schematic diagram of a structure of the speaker module 40 shown in FIG. 3 sectioned in a D-D direction.

The second enclosure 42 is located on a side that is of the speaker core 44 and that is away from the first enclosure 41. The second enclosure 42 includes a bottom surface 421 facing the speaker core 44. A periphery of the bottom surface 421 of the second enclosure 42 partially protrudes to form a limiting protruding strip 422. The second enclosure 42 covers the first enclosure 41, and forms a sound cavity 402 with the first enclosure 41 through enclosing. Specifically, the limiting protruding strip 422 is mounted on the first step surface 4171 and the third step surface 4181, and the limiting protruding strip 422 may be mounted on the first step surface 4171 and the third step surface 4181 by bonding, so that the second enclosure 42 and the first enclosure 41 are fastened to each other.

The speaker core 44 is accommodated in the sound cavity 402. That is, the speaker core 44 is located between the second enclosure 42 and the first enclosure 41. The speaker core 44 is a moving coil speaker core. Certainly, the speaker core 44 may alternatively be a piezoelectric speaker core. In the speaker module 40 shown in this embodiment, the second enclosure 42 and the first enclosure 41 form a modular structure. The second enclosure 42 and the first enclosure 41 can not only fully protect the speaker core 44 located between the second enclosure 42 and the first enclosure 41, but also help simplify assembly of the speaker module 40 and other components.

FIG. 9 is a schematic diagram of an exploded structure of the speaker core 44 in the speaker module 40 shown in FIG. 4.

The speaker core 44 includes a support assembly 441, a magnetic circuit assembly 442, and a vibration assembly 443. The support assembly 441 is configured to support the magnetic circuit assembly 442 and the vibration assembly 443. The magnetic circuit assembly 442 is located on one side of the support assembly 441, and is configured to provide a magnetic field. The vibration assembly 443 is located on the other side of the support assembly 441, and a part of the vibration assembly 443 may vibrate relative to the support assembly 441.

In this embodiment, the support assembly 441 is a basin stand, and the basin stand supports the magnetic circuit assembly 442 and the vibration assembly 443. The basin stand is roughly a cuboid frame. The basin stand includes a top surface 4411 and a bottom surface 4412 that are disposed back to back. The basin stand is provided with a third fastening groove 4413 and a through hole 4414. An opening of the third fastening groove 4413 is located in a middle area of the top surface 4411 of the basin stand. The third fastening groove 4413 is concave from the top surface 4411 of the basin stand to the bottom surface 4412, and the third fastening groove 4413 includes a bottom wall surface 4415. An opening of the through hole 4414 of the basin stand is located on the bottom wall surface 4415 of the third fastening groove 4413. The through hole 4414 of the basin stand extends from the bottom wall surface 4415 of the third fastening groove 4413 to the bottom surface 4412 of the basin stand, and penetrates through the bottom surface 4412 of the basin stand. An edge area of the top surface 4411 of the basin stand partially protrudes to form a plurality of feet 4416, and the plurality of feet 4416 are disposed at intervals. There are eight feet 4416, and every two feet 4416 are located on one side of the basin stand.

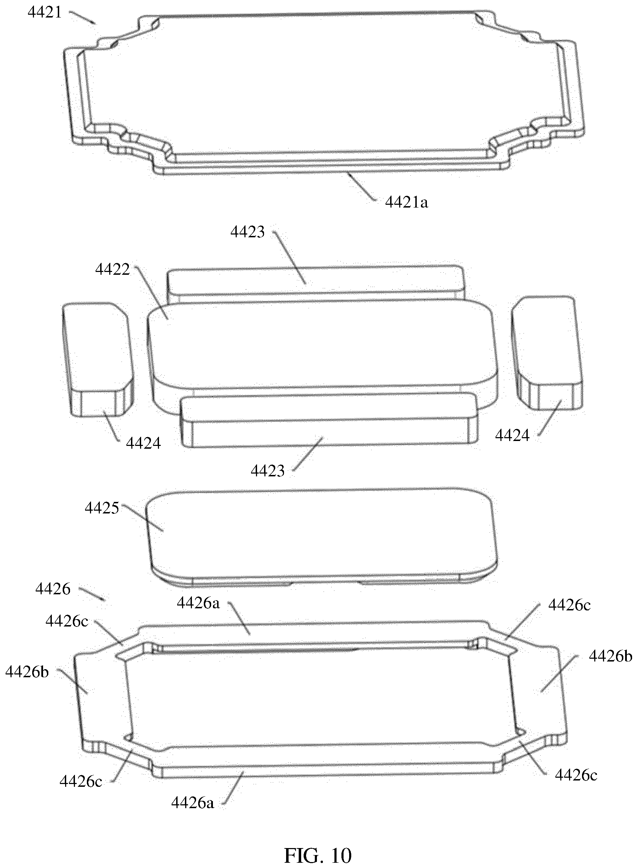

Refer to FIG. 10 together. FIG. 10 is a schematic diagram of an exploded structure of the magnetic circuit assembly 442 in the speaker core 44 shown in FIG. 9.

The magnetic circuit assembly 442 is located on a side close to the top surface 4411 of the basin stand. The magnetic circuit assembly 442 includes a magnetic yoke (yoke) 4421, a central magnet 4422, two first side magnets 4423, two second side magnets 4424, a central electrode plate (washer) 4425, and a side electrode plate 4426. The magnetic yoke 4421 is configured to bear the central magnet 4422, the two first side magnets 4423, and the two second side magnets 4424. The central electrode plate 4425 and the side electrode plate 4426 are located on a side that is of the central magnet 4422, the two first side magnets 4423, and the two second side magnets 4424 and that is away from the magnetic yoke 4421. The magnetic yoke 4421, the central electrode plate 4425, and the side electrode plate 4426 are magnetic conductors, and the central magnet 4422, the two first side magnets 4423, and the two second side magnets 4424 are permanent magnets.

The magnetic yoke 4421 includes a bearing surface 4421a facing the basin stand. The bearing surface 4421a of the magnetic yoke 4421 includes a central area (not shown in the figure) and two first areas (not shown in the figure) and two second areas (not shown in the figure) that are connected to the central area. The central area is roughly rectangular. The two first areas are symmetrically located on two sides of the central area, and the two second areas are symmetrically located on the other two sides of the central area.

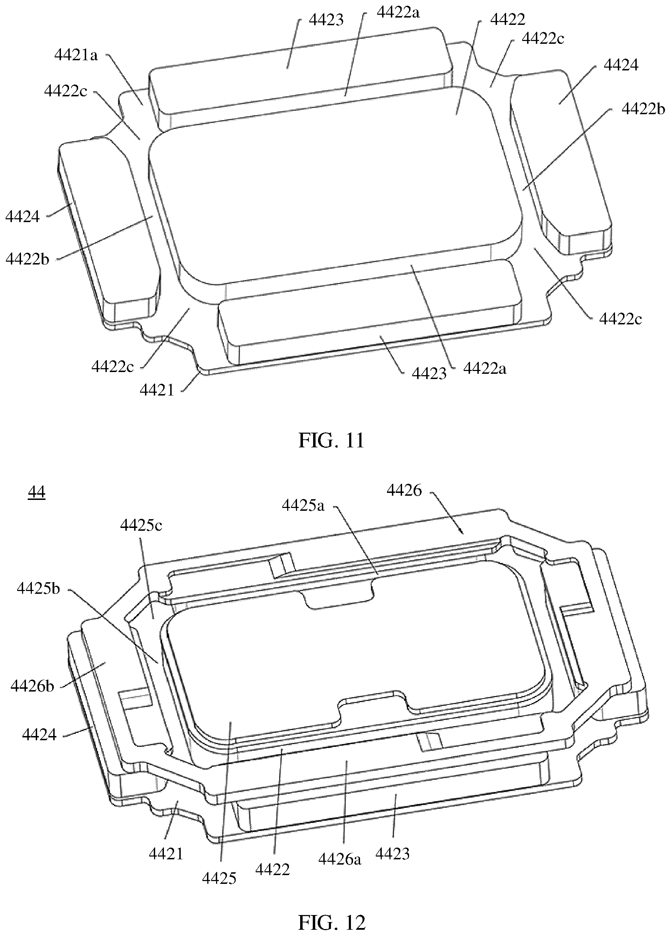

Refer to FIG. 11 together. FIG. 11 is a schematic diagram of an assembly structure of the central magnet 4422, the first side magnets 4423, and the second side magnets 4424 that are mounted on the magnetic yoke 4421 shown in FIG. 10.

The central magnet 4422, the two first side magnets 4423, and the two second side magnets 4424 are all mounted on the bearing surface 4421a of the magnetic yoke 4421. The central magnet 4422, the first side magnets 4423, and the second side magnets 4424 are all mounted on the bearing surface 4421a of the magnetic yoke 4421 by bonding. The central magnet 4422 is roughly of a cuboid structure. Specifically, the central magnet 4422 is mounted on the central area of the bearing surface 4421a. The two first side magnets 4423 are respectively mounted on the two first areas, and are symmetrically distributed on two sides of the central magnet 4422. First gaps 4422a are formed between the first side magnets 4423 and the central magnet 4422. The two second side magnets 4424 are respectively mounted on the two second areas, and are symmetrically distributed on the other two sides of the central magnet 4422. Second gaps 4422b are formed between the second side magnets 4424 and the central magnet 4422. Four third gaps 4422c are respectively formed on outer sides of four corners of the central magnet 4422. Each third gap 4422c connects the first gap 4422a and the second gap 4422b that are adjacent to each other, and communicates with the outside of the magnetic circuit assembly 442.

Refer to FIG. 10 and FIG. 12. FIG. 12 is a schematic diagram of a structure of the magnetic circuit assembly 442 in the speaker core 44 shown in FIG. 9 from another angle.

The central electrode plate 4425 is mounted on a surface that is of the central magnet 4422 and that is away from the magnetic yoke 4421, and the central electrode plate 4425 may be mounted, by bonding, on the surface that is of the central magnet 4422 and that is away from the magnetic yoke 4421. The central electrode plate 4425 is roughly in a rectangular plate shape, and exactly covers a surface that is of the central magnet 4422 and that is away from the magnetic yoke 4421.

The side electrode plate 4426 and the central electrode plate 4425 are located on a same side of the central magnet 4422, and are disposed around the central electrode plate 4425. The side electrode plate 4426 is roughly in a square ring shape. The side electrode plate 4426 includes two oppositely disposed first electrode plate parts 4426a, two oppositely disposed second electrode plate parts 4426b, and four electrode plate connection parts 4426c connected between the first electrode plate parts 4426a and the second electrode plate parts 4426b. The two first electrode plate parts 4426a are respectively mounted on surfaces that are of the two first side magnets 4423 and that are away from the magnetic yoke 4421, and the first electrode plate parts 4426a may be mounted, by bonding, on the surfaces that are of the first side magnets 4423 and that are away from the magnetic yoke 4421. The two first electrode plate parts 4426a are symmetrically distributed on two sides of the central electrode plate 4425, a fourth gap 4425a is formed between each first electrode plate part 4426a and the central electrode plate 4425, and the fourth gap 4425a communicates with the first gap (not shown in the figure). The two second electrode plate parts 4426b are respectively mounted on surfaces that are of the two second side magnets 4424 and that are away from the magnetic yoke 4421, and the second electrode plate parts 4426b may be mounted, by bonding, on the surfaces that are of the second side magnets 4424 and that are away from the magnetic yoke 4421. The two second electrode plate parts 4426b are symmetrically distributed on the other two sides of the central electrode plate 4425, and a fifth gap 4425b is formed between each second electrode plate part 4426b and the central electrode plate 4425. The fifth gap 4425b communicates with the second gap (not shown in the figure). In this case, a sixth gap 4425c is formed between the electrode plate connection part 4426c and the central electrode plate 4425, and the sixth gap 4425c connects the fourth gap 4425a and the fifth gap 4425b that are adjacent to each other, and communicates with the third gap (not shown in the figure).

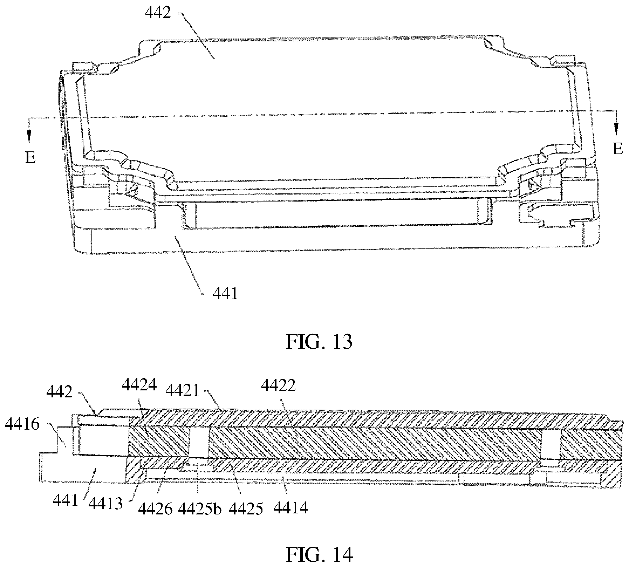

Refer to FIG. 13 and FIG. 14. FIG. 13 is a schematic diagram of an assembly structure in which the magnetic circuit assembly 442 in the speaker core 44 shown in FIG. 9 is mounted on the support assembly 441. FIG. 14 is a schematic diagram of an internal structure of the assembly structure shown in FIG. 13 sectioned in an E-E direction.

The magnetic circuit assembly 442 is mounted on the basin stand. Specifically, a part of the magnetic circuit assembly 442 is mounted on the third fastening groove 4413 of the basin stand, and a part of the magnetic circuit assembly 442 extends out of the third fastening groove 4413. The side electrode plate 4426 of the magnetic circuit assembly 442 is mounted on the third fastening groove 4413, and the side electrode plate 4426 may be mounted on the third fastening groove 4413 by bonding. A surface of the side electrode plate 4426 that faces a same direction as the top surface 4411 of the basin stand is flush with the top surface 4411 of the basin stand, and the central electrode plate 4425 is accommodated in the third fastening groove 4413. In this case, the fourth gaps (not shown in the figure), the fifth gaps 4425b, and the sixth gaps (not shown in the figure) all communicate with the through hole 4414 of the basin stand.

The magnetic yoke 4421, the central magnet 4422, the two first side magnets (not shown in the figure), and the two second side magnets 4424 all extend out of the third fastening groove 4413. The two first side magnets (not shown in the figure) and the two second side magnets 4424 each are partially located on the top surface 4411 of the basin stand, and the first side magnets and the second side magnets are all located between the two feet 4416.

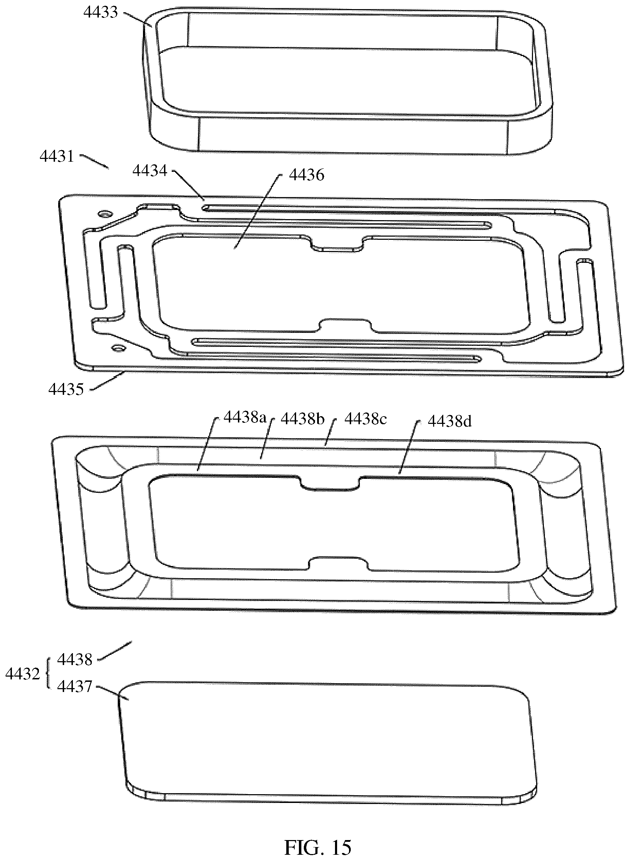

Refer to FIG. 9 and FIG. 15. FIG. 15 is a schematic diagram of an exploded structure of the vibration assembly 443 in the speaker core 44 shown in FIG. 9.

The vibration assembly 443 is located on a side that is of the support assembly 441 and that is away from the magnetic circuit assembly 442. The vibration assembly 443 includes a flexible circuit board 4431, a sound diaphragm 4432, and a voice coil 4433. The flexible circuit board 4431 is located between the sound diaphragm 4432 and the voice coil 4433. The flexible circuit board 4431 is roughly in a rectangular plate shape. The flexible circuit board 4431 is electrically connected to the circuit board (not shown in the figure), and is configured to transmit, to the voice coil 4433, an audio signal transmitted by the circuit board 45. The flexible circuit board 4431 includes a top surface 4434 and a bottom surface 4435 that are disposed back to back. The flexible circuit board 4431 is provided with a through hole 4436, and an opening of the through hole 4436 is located in a middle area of the top surface 4434 of the flexible circuit board 4431. The through hole 4436 of the flexible circuit board 4431 extends from the top surface 4434 of the flexible circuit board 4431 to the bottom surface 4435, and penetrates through the bottom surface 4435 of the flexible circuit board 4431. That is, the through hole 4436 of the flexible circuit board 4431 penetrates through the flexible circuit board 4431 in a thickness direction of the flexible circuit board 4431.

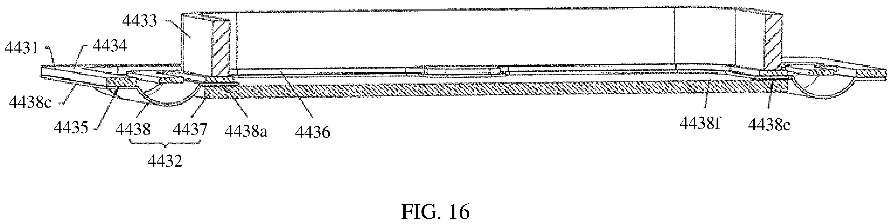

Refer to FIG. 15 and FIG. 16. FIG. 16 is a schematic diagram of a cross-sectional structure of the vibration assembly 443 in the speaker core 44 shown in FIG. 9 in an F-F direction.

The sound diaphragm 4432 is located on one side of the flexible circuit board 4431. The sound diaphragm 4432 includes a dome 4437 and a diaphragm 4438 carrying the dome 4437. The dome 4437 is roughly in a rectangular plate shape. The diaphragm 4438 is roughly in a rectangular ring shape. The diaphragm 4438 includes a first fastening part 4438a, a surround part 4438b, and a second fastening part 4438c that are connected in sequence. The first fastening part 4438a is located inside the surround part 4438b, and the second fastening part 4438c is located outside the surround part 4438b. The first fastening part 4438a includes a top surface 4438d and a bottom surface 4438e that are disposed back to back. The first fastening part 4438a is provided with a through hole 443 8f, and an opening of the through hole 4438f is located in a middle area of the top surface 4438d of the first fastening part 4438a. The through hole 4438f of the first part 4438a extends from the top surface 4438d of the first fastening part 4438a to the bottom surface 4438e, and penetrates through the bottom surface 4438e of the first fastening part 4438a. That is, the through hole 4438f of the first fastening part 4438a penetrates through the first fastening part 4438a in a thickness direction of the first fastening part 4438a. The dome 4437 is mounted on the bottom surface 4438e of the first fastening part 4438a, and covers the through hole 4438f of the first fastening part 4438a. A cross section of the surround part 4438b is arc-shaped or roughly arc-shaped, and an extension track of the surround part 4438b is a rounded rectangle. The surround part 4438b is concave. To be specific, the surround part 4438b is concave in a direction away from the top surface 4438d of the first fastening part 4438a. When the surround part 4438b is subject to an external force, the surround part 4438b can deform, so that the first fastening part 4438a and the second fastening part 4438c move relative to each other, and the dome 4437 and the second fastening part 4438c move relative to each other.

The sound diaphragm 4432 is mounted on the bottom surface 4435 of the flexible circuit board 4431. Specifically, the first fastening part 4438a and the second fastening part 4438c of the diaphragm 4438 are mounted on the bottom surface 4435 of the flexible circuit board 4431, and the first fastening part 4438a and the second fastening part 4438c may be mounted on the bottom surface 4435 of the flexible circuit board 4431 by bonding. In this case, the through hole 4438f of the first fastening part 4438a directly faces the through hole 4436 of the flexible circuit board 4431, and the dome 4437 covers the through hole 4436 of the flexible circuit board 4431.

The voice coil 4433 is located on a side that is of the flexible circuit board 4431 and that is away from the sound diaphragm 4432. The voice coil 4433 is roughly in a square ring shape. The voice coil 4433 is mounted on the top surface 4434 of the flexible circuit board 4431, and is disposed around a periphery of the through hole 4436 of the flexible circuit board 4431. The voice coil 4433 may be mounted on the top surface 4434 of the flexible circuit board 4431 by welding, and is electrically connected to the flexible circuit board 4431. The voice coil 4433 receives an audio signal transmitted by the flexible circuit board 4431, and drives the sound diaphragm 4432 to vibrate up and down.

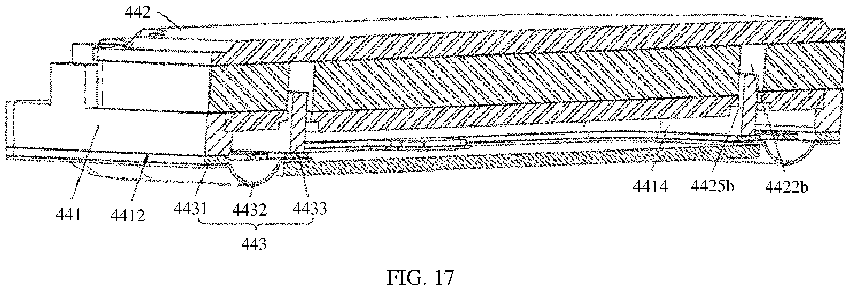

FIG. 17 is a schematic diagram of an internal structure of the speaker core 44 sectioned in a G-G direction in the speaker module 40 shown in FIG. 4.

The vibration assembly 443 is mounted on the bottom surface 4412 of the basin stand. Specifically, an edge part of the flexible circuit board 4431 in the vibration assembly 443 is mounted on the bottom surface 4412 of the basin stand, and the flexible circuit board 4431 may be mounted on the bottom surface 4412 of the basin stand by bonding. In this case, the voice coil 4433 passes through the through hole 4414 of the basin stand, passes through the fourth gap (not shown in the figure), the fifth gap 4425b, and the sixth gap (not shown in the figure), and extends into the first gap (not shown in the figure), the second gap 4422b, and the third gap (not shown in the figure). The magnetic circuit assembly 442 provides a magnetic field for vibration of the voice coil 4433. When the voice coil 4433 receives an audio signal transmitted by the flexible circuit board 4431, the voice coil 4433 moves up and down to cut a magnetic line of the magnetic field, and drives the flexible circuit board 4431 and the sound diaphragm 4432 to vibrate.

Refer to FIG. 7 and FIG. 8. The speaker core 44 is accommodated in the sound cavity 402. Specifically, the speaker core 44 is mounted on the second step surface 4172 of the first enclosure 41. The second fastening part 4438c of the sound diaphragm 4432 in the vibration assembly is mounted on the second step surface 4172, and the second fastening part 4438c of the sound diaphragm 4432 may be mounted on the second step surface 4172 by bonding. The sound diaphragm 4432 divides the sound cavity 402 into a front sound cavity 403 and a rear sound cavity 404. The front sound cavity 403 is formed between the first enclosure 41 and the sound diaphragm 4432. To be specific, the bottom wall 414, the first side wall 415, and the sound diaphragm 4432 jointly form the front sound cavity 403 through enclosing. The sound outlet hole 401 connects the front sound cavity 403 and the outside of the speaker module 40. The communicating hole 413 connects the front sound cavity 403 and the resonant groove 416. The rear sound cavity 404 is located on a side that is of the sound diaphragm 4432 and that is away from the front sound cavity 403. That is, the rear sound cavity 404 is formed between the sound diaphragm 4432 and the second enclosure 42. The waterproof breathable film 43 is accommodated in the sound cavity 402, and is spaced away from the speaker core 44. The waterproof breathable film 43 is mounted on the fourth step surface 4182 of the first enclosure 41. Specifically, the waterproof breathable film 43 may be mounted on the fourth step surface 4182 by bonding. The waterproof breathable film 43 covers an opening that is of the resonant groove 412 and that faces the rear sound cavity 404, and forms a resonant cavity together with the resonant groove 412. The resonant cavity communicates with the front sound cavity 403 through the communicating hole 413, to weaken a peak value of a high-frequency resonance peak when the speaker module 40 works, and improve a phenomenon of a high-frequency sharpness and a heavy labiodental sound when the speaker module 40 makes a sound. It should be understood that, in another embodiment, there may be a plurality of resonant cavities in this embodiment. For example, two resonant cavities are symmetrically distributed on two sides of the front sound cavity 403. This is not specifically limited in this application. Air permeability of the waterproof breathable film 43 is between 100 ml/min and 200 ml/min. That is, in one minute, the waterproof breathable film 43 allows 100 ml to 200 ml air to pass through the waterproof breathable film 43. It should be understood that the waterproof breathable film 43 may also have no groove. This is not specifically limited in this application.

When the speaker module 40 does not work, due to existence of the waterproof breathable film 43, the front sound cavity 403 and the rear sound cavity 404 are connected, atmospheric pressure between the front sound cavity 403 and the rear sound cavity 404 is always balanced, and a position of the sound diaphragm 4432 in the sound cavity 402 does not shift. This does not affect normal working of the speaker module 40. Compared with sound quality of an existing speaker module, sound quality of the speaker module 40 is improved. When the speaker module 40 works, the vibration assembly 443 vibrates to drive air in the sound cavity 402 to fluctuate. Because an air flow speed generated due to air fluctuation in the sound cavity 402 is far greater than the air permeability of the waterproof breathable film 43, and in this case, the resonant cavity communicates with only the front sound cavity 403, the waterproof breathable film 43 approximately isolates the front sound cavity 403 from the rear sound cavity 404, to prevent air flowing between the front sound cavity 403 and the rear sound cavity 404 from affecting a volume of a sound made by the speaker module 40. In addition, the resonant cavity and the front sound cavity 403 form a Helmholtz resonator (Helmholtz resonators) having a resonance frequency. Based on a Helmholtz resonance (Helmholtz resonance) principle, the resonant cavity forms an anti-resonance peak value at a high-frequency resonance peak of the front sound cavity 403, to weaken a peak value of the speaker module 40 at the high-frequency resonance peak, improve flatness of a high-frequency response, and improve acoustic performance of the speaker module 40.

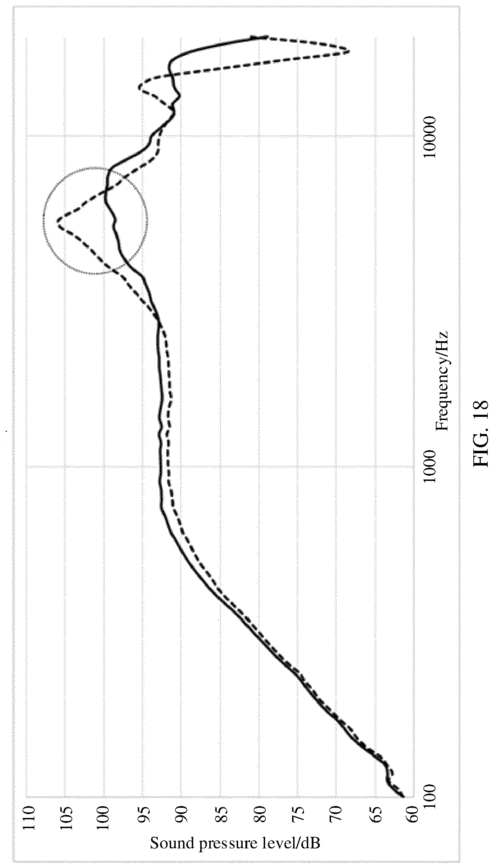

FIG. 18 is a schematic diagram of emulation results of audio performance tests on the speaker module 40 in the electronic device 100 shown in FIG. 1 and an existing speaker module. A difference between the existing speaker module and the speaker module 40 in the electronic device 100 shown in this embodiment lies in that no resonant cavity is designed in the existing speaker module. A black solid line is a test result of the electronic device 100 shown in this embodiment, and a black dashed line is a test result of an existing electronic device.

Compared with the existing speaker module, in the speaker module 40 of the electronic device 100 in this embodiment of this application, the resonant cavity that communicates with the front sound cavity 403 is designed, so that a peak value at a high-frequency resonance peak (about 5 kHz to 6 kHz, as shown by a dashed circle in FIG. 18) is reduced by about 7.3 dB, loudness of the high-frequency resonance peak is reduced, less high-frequency dental sound and metal sound are generated, and sound quality of the speaker module 40 is improved.

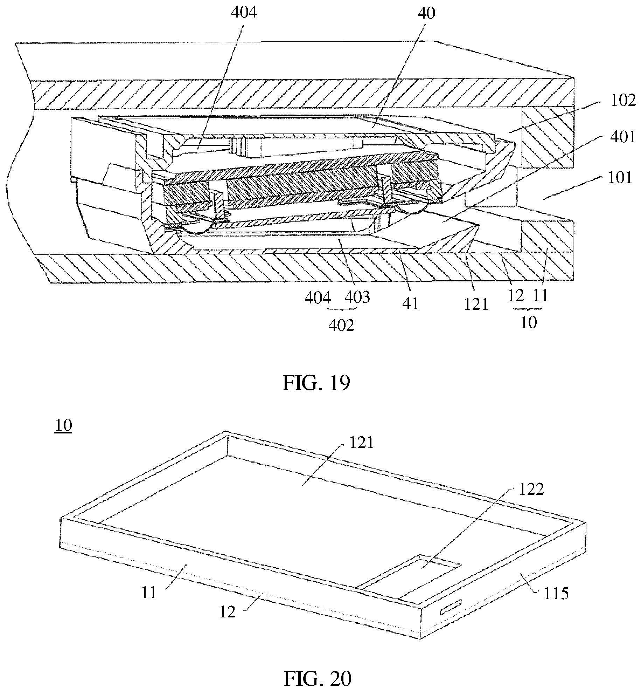

FIG. 19 is a schematic diagram of a partial structure of the electronic device 100 shown in FIG. 1 sectioned in an H-H direction.

The speaker module 40 is installed in the overall inner cavity 102. Specifically, the speaker module 40 is mounted on the mounting surface 121 of the rear cover 12, and the speaker module 40 is disposed close to the lower frame 115. The first enclosure 41 in the speaker module 40 is mounted on the mounting surface 121, and the first enclosure 41 may be mounted on the mounting surface 121 by bonding. The sound outlet hole 401 of the first enclosure 41 faces the speaker hole 101, and directly faces the speaker hole 101. When the speaker module 40 receives an audio signal processed by the signal processor, and vibrates to make a sound, the sound is transmitted to the external environment through the sound outlet hole 401 and the speaker hole 101 in sequence, so that the electronic device 100 makes a sound. It should be noted that, in another embodiment, the speaker module 40 may also be installed on a middle plate or a support. This is not specifically limited in this application.

In the electronic device 100 shown in this embodiment, the speaker module 40 is provided with only the sound outlet hole 401 that communicates with the external environment, and the sound cavity 402 of the speaker module 40 does not communicate with the overall inner cavity 102 of the electronic device 100. When the electronic device 100 is pressed or released in a use process, a change in internal atmospheric pressure of the overall inner cavity 102 does not affect balance of internal atmospheric pressure of the front sound cavity 403 and the rear sound cavity 404 in the speaker module 40, a position of the sound diaphragm 4432 in the sound cavity 402 does not shift, and normal working of the speaker module 40 is not affected. Compared with sound quality of an existing electronic device, sound quality of the speaker module 40 is improved.

FIG. 20 is a schematic diagram of a structure of a housing 110 in a second electronic device 100 according to an embodiment of this application.

A difference between this embodiment and the electronic device 100 shown in the first embodiment lies in that a rear cover 12 of the housing 110 is provided with a mounting groove 122, and an opening of the mounting groove 122 is located on a mounting surface 121. The mounting groove 122 is concave from the mounting surface 121 to a surface that is away from a frame 11. The opening of the mounting groove 122 is located in an area that is of the mounting surface 121 and that faces a lower frame 115.

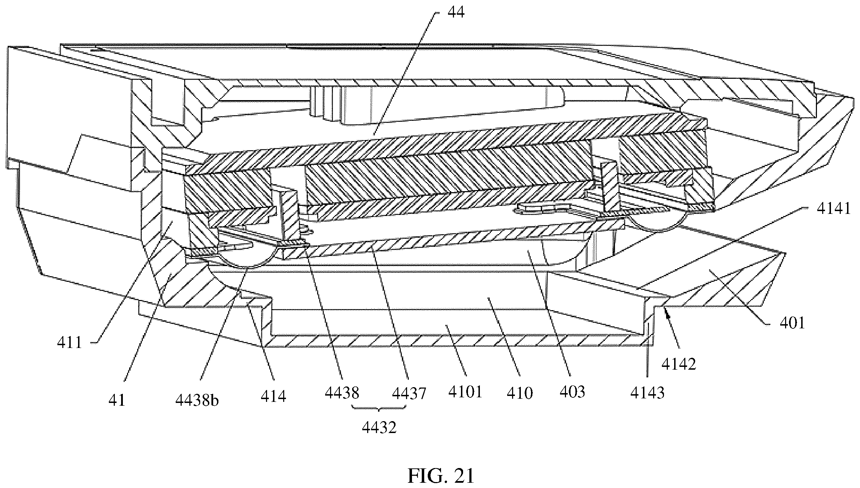

FIG. 21 is a schematic diagram of a structure of a speaker module 40 sectioned in a C-C direction in the second electronic device 100 according to an embodiment of this application.

In this embodiment, a first enclosure 41 is provided with a groove 410, and an opening of the groove 410 is located on a bottom wall surface of an accommodating groove 411. That is, the opening of the groove 410 is located on a bottom wall surface 4141 of a bottom wall 414. Specifically, the opening of the groove 410 is located in a middle area in the bottom wall surface 4141 of the bottom wall 414. The groove 410 is concave from the bottom wall surface 4141 of the bottom wall 414 in a direction away from an opening of the accommodating groove 411. An outer wall surface 4142 of the bottom wall 414 partially protrudes to form a protrusion part 4143, and the groove 410 is located in the protrusion part 4143. It may be understood that the bottom wall surface of the accommodating groove 411 is a part of the bottom wall surface 4141 of the bottom wall 414.

A dome 4437 of a speaker core 44 directly faces the groove 410. That is, an orthographic projection of the dome 4437 on the bottom wall surface 4141 of the bottom wall 414 is located in the opening of the groove 410, so that when the sound diaphragm 4432 vibrates, the dome 4437 may partially or completely extend into the groove 410, to increase vibration space between the dome 4437 and the first enclosure 41. Utilization of space between a surround portion 4438b of a diaphragm 4438 and the first enclosure 41 is increased, to help increase vibration amplitude of the sound diaphragm 4432.

A distance between the dome 4437 and a groove bottom surface 4101 of the groove 410 is greater than or equal to a distance between the surround part 4438b and the bottom wall surface 4141 of the bottom wall 414, so that when the vibration space between the dome 4437 and the first enclosure 41 is fully used, the vibration space between the surround portion 4438b of the diaphragm 4438 and the first enclosure 41 can also be fully used. This helps increase vibration amplitude of the sound diaphragm 4432, and improve audio performance of a sound made by the speaker module 40.

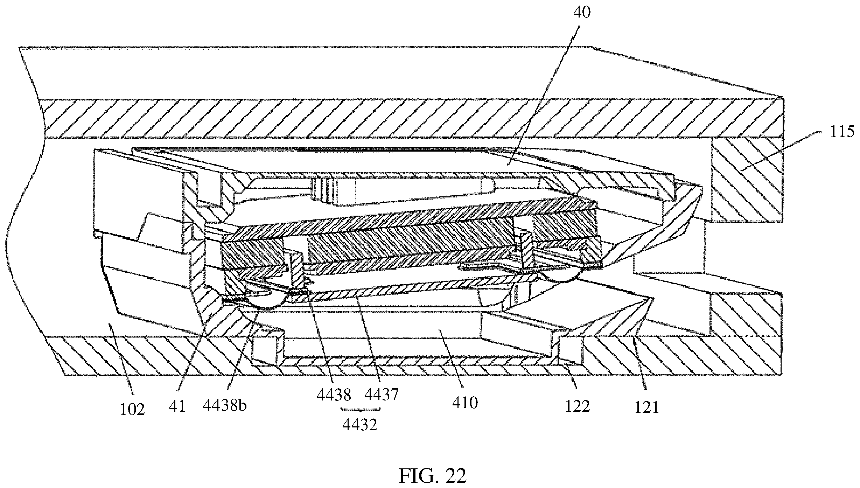

Refer to FIG. 22 together. FIG. 22 is a schematic diagram of a partial structure of the second electronic device 100 sectioned in an H-H direction according to an embodiment of this application.

The speaker module 40 is mounted on the mounting surface 121, and the speaker module 40 is disposed close to the lower frame 115. Specifically, the first enclosure 41 is partially accommodated in the mounting groove 122. In this case, the protrusion part 4143, that is, a part that forms the groove 410 in the first enclosure 41, is accommodated in the mounting groove 122, so that vibration space between the dome 4437 and the first enclosure 41 is increased in the limited overall inner cavity 102 without increasing a thickness of the electronic device 100. This helps increase vibration amplitude of the sound diaphragm 4432 and improve audio performance of the electronic device 100.

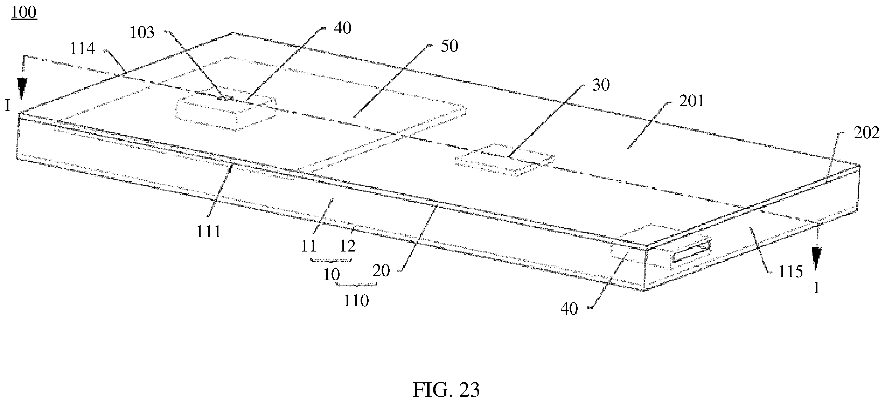

FIG. 23 is a schematic diagram of a structure of a third electronic device 100 according to an embodiment of this application.

A difference between the electronic device 100 shown in this embodiment and the foregoing two electronic devices 100 lies in that a screen 20 is provided with a speaker hole 103. The electronic device 100 includes two speaker modules 40 and a support 50. The two speaker modules 40 and the support 50 are all accommodated in an overall inner cavity. A structure of one speaker module 40 is the same as a structure of the speaker module 40 in the electronic device 100 shown in the foregoing two embodiments, and details are not described herein again. The other speaker module 40 is electrically connected to a mainboard 30, receives an audio signal transmitted by the mainboard 30, and vibrates to make a sound based on the received audio signal. The sound is diffused to an external environment through the speaker hole 103, so that the electronic device 100 makes a sound. The speaker hole 103 is a receiver hole. That is, the other speaker module 40 is used by the electronic device 100 to make a sound by using a receiver.

The screen 20 includes a non-display surface 202 and a display surface 201 that are disposed back to back. An opening of the speaker hole 103 is located on the display surface 201, and the speaker hole 103 extends from the display surface 201 to the non-display surface 202 and penetrates through the non-display surface 202. That is, the speaker hole 103 penetrates through the screen 20 along a thickness direction of the screen 20. The opening of the speaker hole 103 is located in an area that is of the display surface 201 and that is close to an upper frame 114. It should be understood that other structure of the screen 20 is roughly the same as the structure of the screen 20 shown in the foregoing two embodiments, and details are not described herein again.

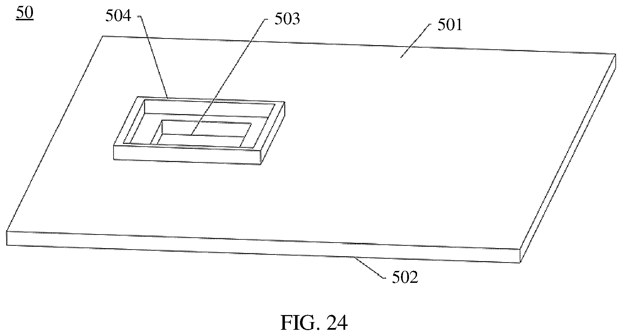

FIG. 24 is a schematic diagram of a structure of the support 50 in the electronic device 100 shown in FIG. 23.

The support 50 includes an assembly surface 501 and a mounting surface 502 that are disposed back to back. The support 50 is provided with an assembly groove 503. An opening of the assembly groove 503 of the support 50 is located on the assembly surface 501 of the support 50. The assembly groove 503 of the support 50 extends from the assembly surface 501 of the support 50 to the mounting surface 502, and penetrates through the mounting surface 502 of the support 50. That is, the assembly groove 503 of the support 50 penetrates through the support 50 in a thickness direction of the support 50. The assembly surface 501 of the support 50 partially protrudes to form a limiting frame 504. The limiting frame 504 protrudes from the assembly surface 501 of the support 50 in a direction away from the mounting surface 502, and is disposed around a periphery of the assembly groove 503. It should be understood that a shape of the limiting frame 504 is not limited to the square shown in FIG. 19, and may also be another shape such as a circle or an ellipse.

It should be noted that orientation terms such as "top" and "bottom" used in the electronic device 100 in this embodiment are mainly described based on a display orientation of the electronic device 100 in FIG. 23, and do not limit an orientation of the electronic device 100 in an actual application scenario.

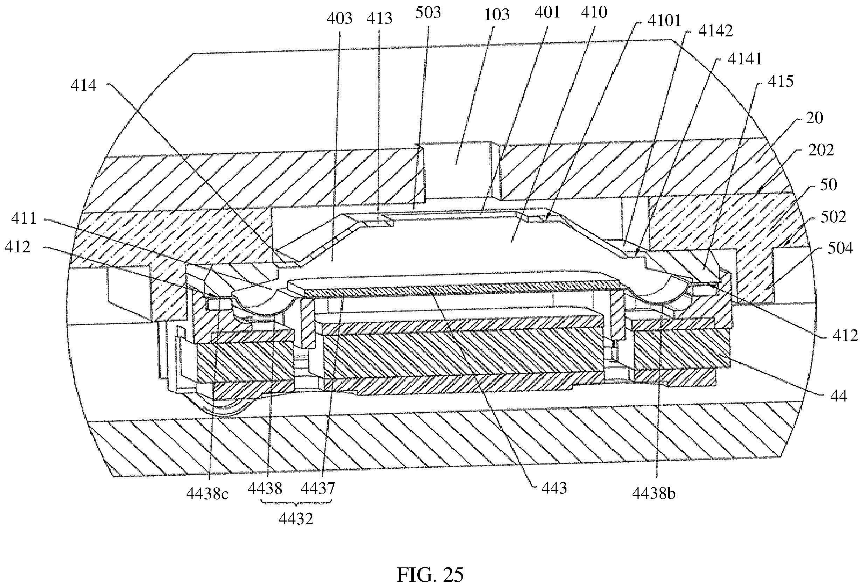

FIG. 25 is a schematic diagram of a partial structure of the electronic device 100 shown in FIG. 23 sectioned in an I-I direction.

The support 50 is accommodated in the overall space 102. Specifically, the support 50 is mounted on an area that is of the non-display surface 202 of the screen 20 and that is close to the upper frame (not shown in the figure), and the support 50 may be mounted on the non-display surface 202 by bonding. In this case, the limiting frame 504 is located on a side that is of the support 50 and that is away from the screen 20, the assembly groove 503 of the support 50 communicates with the speaker hole 103, and the assembly groove 503 and the speaker hole 103 directly face each other.

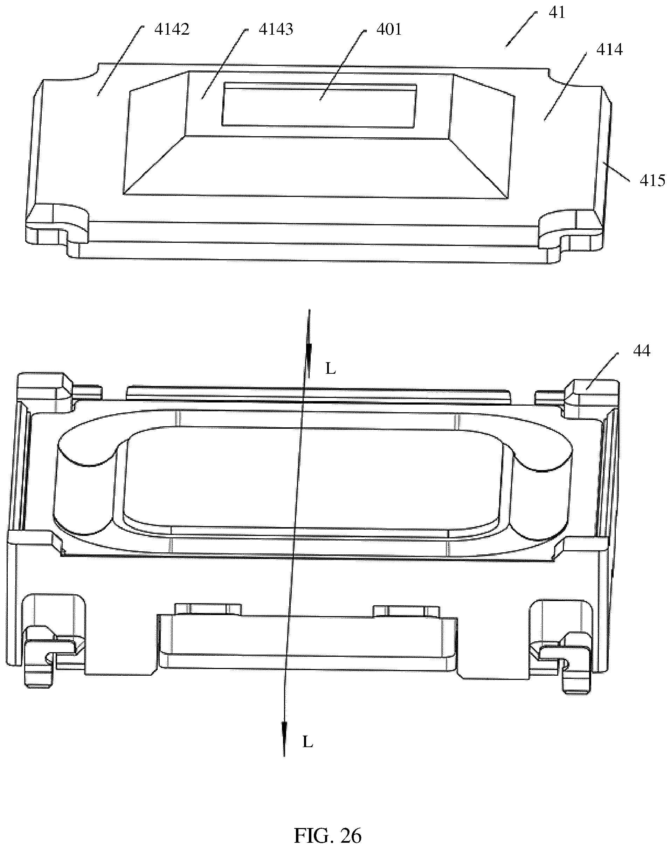

Refer to FIG. 26 together. FIG. 26 is a schematic diagram of a structure of the speaker module 40 in the electronic device 100 shown in FIG. 23.

The speaker module 40 is located on a side that is of the support 50 and that is away from the screen 20. The speaker module 40 is provided with a sound outlet hole 401. Specifically, the speaker module 40 includes a first enclosure 41 and a speaker core 44, and the speaker core 44 is mounted on the first enclosure 41. The sound outlet hole 401 is disposed on the first enclosure 41.

The first enclosure 41 is provided with an accommodating groove 411 and a groove 410. The first enclosure 41 includes a bottom wall 414 and a first side wall 415 connected to the bottom wall 414. The first side wall 415 and the bottom wall 414 form the accommodating groove 411 through enclosing. The bottom wall 414 includes a bottom wall surface 4141 facing the accommodating groove 411 and an outer wall surface 4142 facing away from the accommodating groove 4141. An opening of the groove 410 is located on the bottom wall surface 4141 of the bottom wall 414, and the groove 410 is concave from the bottom wall surface 4141 of the bottom wall 414 in a direction away from the opening of the accommodating groove 411. An opening of the sound outlet hole 401 is located on a groove bottom surface 4101 of the groove 410. The sound outlet hole 401 extends from the groove bottom surface 4101 of the groove 410 in a direction away from the groove 410, and penetrates through a top surface of the first enclosure 41, to connect the accommodating groove 411 and the outside of the speaker module 40. The outer wall surface 4142 of the bottom wall 414 partially protrudes to form a protrusion part 4143, the protrusion part 4143 protrudes from the outer wall surface 4142 of the accommodating groove 4141 in a direction away from the bottom wall surface 4141, and the groove 410 is located in the protrusion part 413.

The speaker core 44 is mounted on a bottom surface of the first enclosure 41, and is partially accommodated in the accommodating groove 416. A front sound cavity 403 is formed between the speaker core 44 and the first enclosure 41. That is, the speaker core 44, the bottom wall 414, and the first side wall 415 jointly form the front sound cavity 403 through enclosing, and the sound outlet hole 401 connects the front sound cavity 403 and the outside of the speaker module 40. It should be noted that orientation terms such as "top" and "bottom" used in the electronic device 100 in this embodiment are mainly described based on a display orientation of the electronic device 100 in FIG. 20, and do not limit an orientation of the electronic device 100 in an actual application scenario.

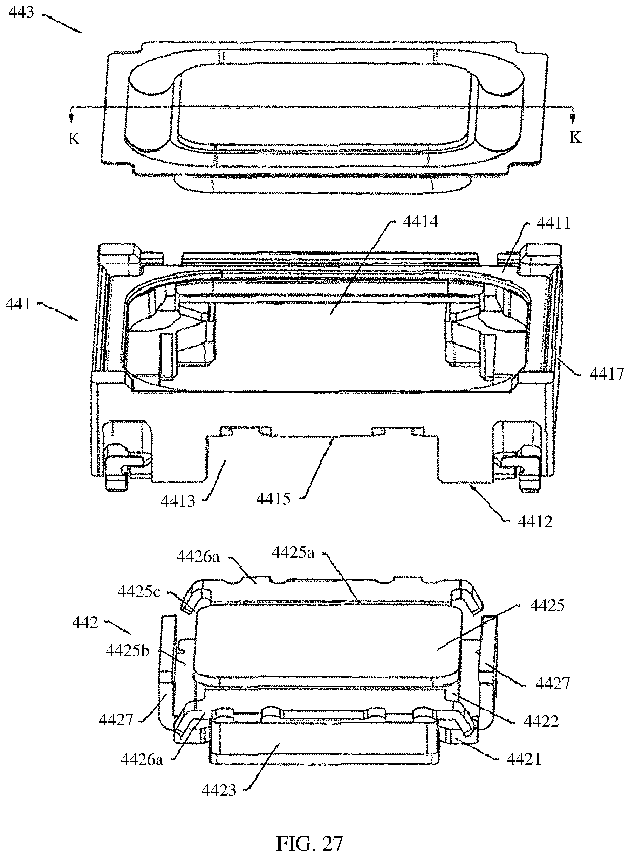

FIG. 27 is a schematic diagram of an exploded structure of the speaker core 44 in the speaker module 40 shown in FIG. 26.

The speaker core 44 includes a support assembly 441, a magnetic circuit assembly 442, and a vibration assembly 443. The support assembly 441 is configured to support the magnetic circuit assembly 442 and the vibration assembly 443. The magnetic circuit assembly 442 is located on one side of the support assembly 441, and is configured to provide a magnetic field. The vibration assembly 443 is located on the other side of the support assembly 441, and a part of the vibration assembly 443 may vibrate relative to the support assembly 441. The speaker core 44 is a moving coil speaker core.

The support assembly 441 includes a basin stand, and the basin stand supports the magnetic circuit assembly 442 and the vibration assembly 443. The basin stand is roughly a cuboid frame. The basin stand includes a top surface 4411 and a bottom surface 4412 that are disposed back to back, and an outer circumferential surface connected between the top surface 4411 and the bottom surface 4412. The basin stand is provided with a third fastening groove 4413 and a through hole 4414. An opening of the third fastening groove 4413 is located in a middle area of the bottom surface 4412 of the basin stand. The third fastening groove 4413 is concave from the bottom surface 4412 of the basin stand to the top surface 4411, and partially penetrates through the outer circumferential surface 4417 of the basin stand. The third fastening groove 4413 includes a bottom wall surface 4415. An opening of the through hole 4414 of the basin stand is located on the bottom wall surface 4415 of the third fastening groove 4413. The through hole 4414 of the basin stand extends from the bottom wall surface 4415 of the third fastening groove 4413 to the top surface 4411 of the basin stand, and penetrates through the top surface 4411 of the basin stand.

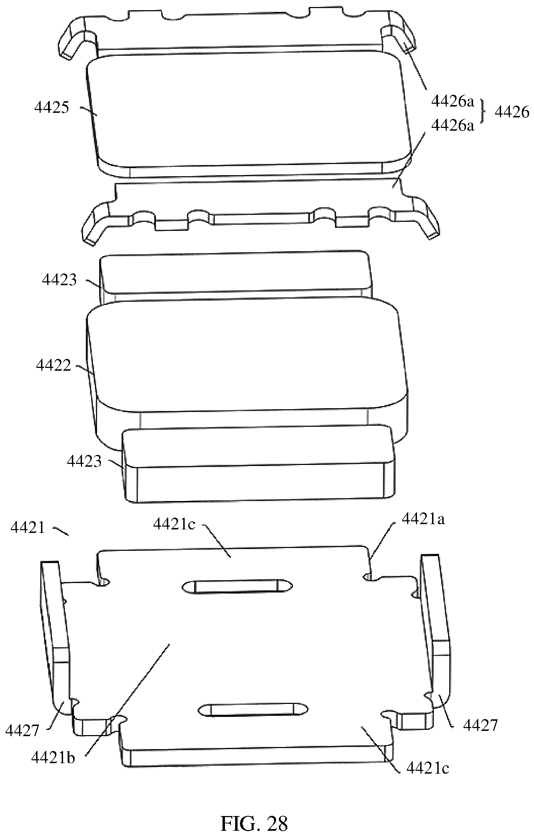

Refer to FIG. 28 together. FIG. 28 is a schematic diagram of an exploded structure of the magnetic circuit assembly 442 in the speaker core 44 shown in FIG. 27.

The magnetic circuit assembly 442 is located on a side close to the bottom surface 4412 of the basin stand. The magnetic circuit assembly 442 includes a magnetic yoke 4421, a central magnet 4422, two first side magnets 4423, a central electrode plate 4425, and a side electrode plate 4426. The magnetic yoke 4421 is configured to bear the central magnet 4422 and the two first side magnets 4423. The central electrode plate 4425 and the side electrode plate 4426 are located on a side that is of the central magnet 4422 and the two first side magnets 4423 and that is away from the magnetic yoke 4421. The magnetic yoke 4421, the central electrode plate 4425, and the side electrode plate 4426 are magnetic conductors, and the central magnet 4422 and the two first side magnets 4423 are permanent magnets.

Two peripheral edges of the magnetic yoke 4421 disposed opposite to each other are bent and extended to form two mounting parts 4427. The magnetic yoke 4421 includes a bearing surface 4421a facing the basin stand. The bearing surface 4421a includes a central area 4421b and two first areas 4421c connected to the central area 4421b. The central area 4421b is roughly rectangular. The two first areas 4421c are symmetrically located on two sides of the central area 4421b, and the two mounting parts 4427 are symmetrically distributed on the other two sides of the central area 4421b.

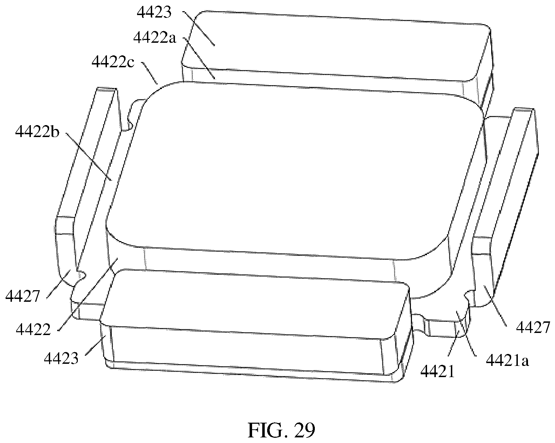

FIG. 29 is a schematic diagram of an assembly structure of the central magnet 4422 and the first side magnets 4423 shown in FIG. 28 that are mounted on the magnetic yoke 4421.

The central magnet 4422 and the two first side magnets 4423 are all mounted on the bearing surface 4421a of the magnetic yoke 4421. The central magnet 4422 and the first side magnets 4423 may be all mounted on the bearing surface 4421a by bonding. The central magnet 4422 is roughly of a cuboid structure. The central magnet 4422 is mounted on the central area of the bearing surface 4421a. The two first side magnets 4423 are respectively mounted on the two first areas, and are symmetrically distributed on two sides of the central magnet 4422. First gaps 4422a are formed between the first side magnets 4423 and the central magnet 4422. The two mounting parts 4427 are symmetrically distributed on the other two sides of the central magnet 4422, and second gaps 4422b are formed between the mounting parts 4427 and the central magnet 4422. Four third gaps 4422c are respectively formed on outer sides of four corners of the central magnet 4422. Each third gap 4422c connects the first gap 4422a and the second gap 4422b that are adjacent to each other, and communicates with the outside of the magnetic circuit assembly 442.

Refer to FIG. 27 and FIG. 28. The central electrode plate 4425 is mounted on a surface that is of the central magnet 4422 and that is away from the magnetic yoke 4421, and the central electrode plate 4425 may be mounted, by bonding, on the surface that is of the central magnet 4422 and that is away from the magnetic yoke 4421. The central electrode plate 4425 is roughly in a rectangular plate shape, and exactly covers a surface that is of the central magnet 4422 and that is away from the magnetic yoke 4421.

The side electrode plate 4426 and the central electrode plate 4425 are located on a same side of the central magnet 4422, and are disposed around the central electrode plate 4425. Two first electrode plate parts 4426a are oppositely disposed on the side electrode plate 4426. The two first electrode plate parts 4426a are respectively mounted on surfaces that are of the two first side magnets 4423 and that are away from the magnetic yoke 4421, and the first electrode plate parts 4426a may be mounted, by bonding, on the surfaces that are of the first side magnets 4423 and that are away from the magnetic yoke 4421. The two first electrode plate parts 4426a are symmetrically distributed on two sides of the central electrode plate 4425, a fourth gap 4425a is formed between the first electrode plate part 4426a and the central electrode plate 4425, and the fourth gap 4425a communicates with the first gap (not shown in the figure). The two mounting parts 4427 are symmetrically distributed on the other two sides of the central electrode plate 4425, a fifth gap 4425b is formed between the mounting part 4427 and the central electrode plate 4425, and the fifth gap 4425b communicates with the second gap (not shown in the figure). Four sixth gaps 4425c are formed on the outer sides of the four corners of the central electrode plate 4425, and each sixth gap 4425c connects the fourth gap 4425a and fifth gap 4425b that are adjacent, and communicates with the third gap (not shown in the figure).

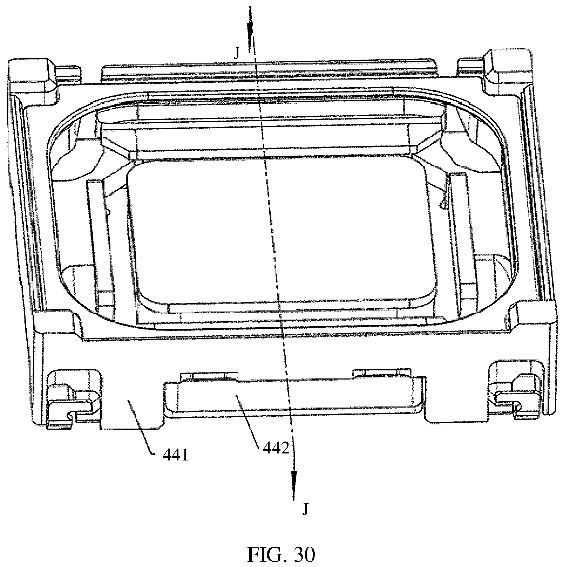

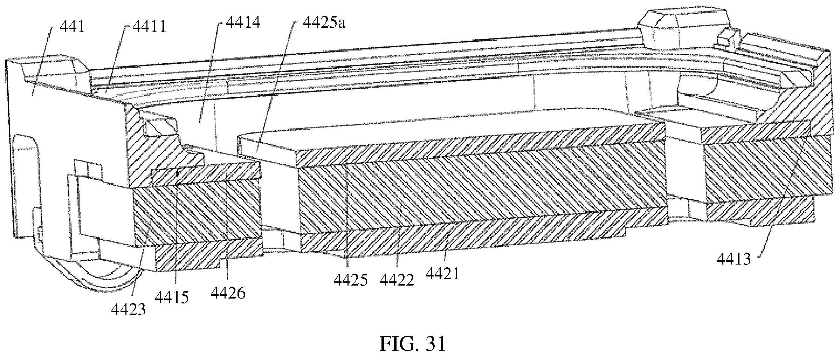

Refer to FIG. 30 and FIG. 31. FIG. 30 is a schematic diagram of an assembly structure in which the magnetic circuit assembly 442 in the speaker core 44 shown in FIG. 27 is mounted on the support assembly 441. FIG. 31 is a schematic diagram of a structure of the assembly structure shown in FIG. 30 sectioned in a J-J direction.

The magnetic circuit assembly 442 is mounted on the basin stand. Specifically, the magnetic circuit assembly 442 is mounted on the third fastening groove 4413 of the basin stand. The side electrode plate 4426 of the magnetic circuit assembly 442 is mounted on the third fastening groove 4413, and the side electrode plate 4426 may be mounted on the bottom wall surface 4415 of the third fastening groove 4413 by bonding. A surface that is of the side electrode plate 4426 and that faces a same direction as the top surface 4411 of the basin stand is flush with the bottom wall surface 4415 of the third fastening groove 4413. The central electrode plate 4425 is accommodated in the third fastening groove 4413. In this case, the fourth gaps 4425a, the fifth gaps (not shown in the figure), and the sixth gaps (not shown in the figure) all communicate with the through hole 4414 of the basin stand.

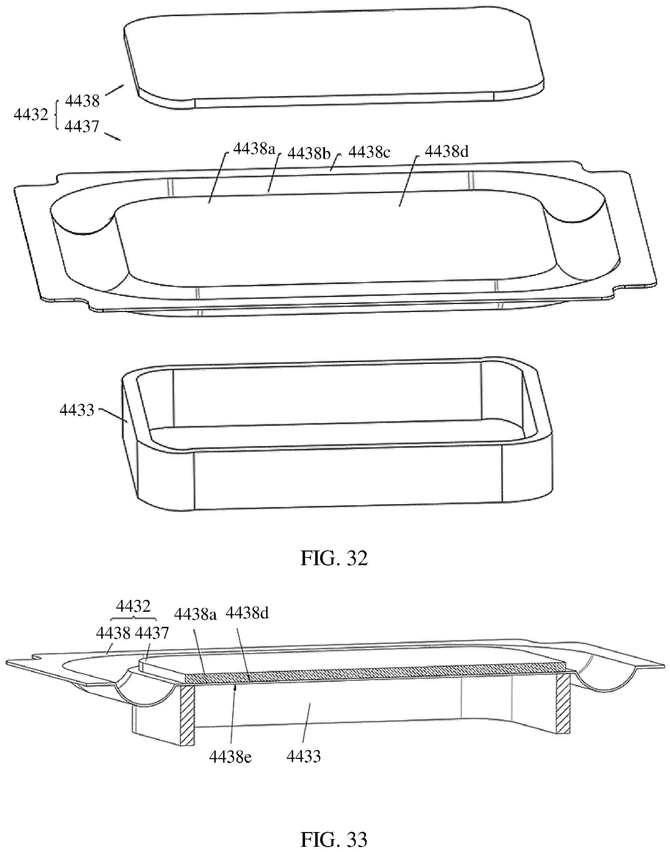

Refer to FIG. 32 and FIG. 33. FIG. 32 is a schematic diagram of an exploded structure of the vibration assembly 443 in the speaker core 44 shown in FIG. 27. FIG. 33 is a schematic diagram of a structure of the vibration assembly 443 shown in FIG. 27 sectioned in a K-K direction.

The vibration assembly 443 is located on a side that is of the support assembly 441 and that is away from the magnetic circuit assembly 442. The vibration assembly 443 includes a sound diaphragm 4432 and a voice coil 4433. The sound diaphragm 4432 includes a dome 4437 and a diaphragm 4438 carrying the dome 4437. The dome 4437 is roughly in a rectangular plate shape. The diaphragm 4438 is roughly in a rectangular ring shape. The diaphragm 4438 includes a first fastening part 4438a, a surround part 4438b, and a second fastening part 4438c that are connected in sequence. The first fastening part 4438a is located inside the surround part 4438b, and the second fastening part 4438c is located outside the surround part 4438b. The first fastening part 4438a includes a top surface 4438d and a bottom surface 4438e that are disposed back to back. The dome 4437 is mounted on the top surface 4438d of the first fastening part 4438a. A cross section of the surround part 4438b is arc-shaped or roughly arc-shaped, and an extension track of the surround part 4438b is a rounded rectangle. The surround part 4438b is concave. To be specific, the surround part 4438b is concave in a direction to the bottom surface 4438e of the first fastening part 4438a. When the surround part 4438b is subject to an external force, the surround part 4438b can deform, so that the first fastening part 4438a and the second fastening part 4438c move relative to each other, and the dome 4437 and the second fastening part 4438c move relative to each other. The voice coil 4433 is located on a side that is of the diaphragm 4438 and that is away from the dome 4437. The voice coil 4433 is roughly in a square ring shape. The voice coil 4433 is mounted on the bottom surface 4438e of the first fastening part 4438a, the voice coil 4433 is electrically connected to the mainboard (not shown in the figure), and the voice coil 4433 receives an audio signal transmitted by the mainboard and drives the sound diaphragm 4432 to vibrate up and down.

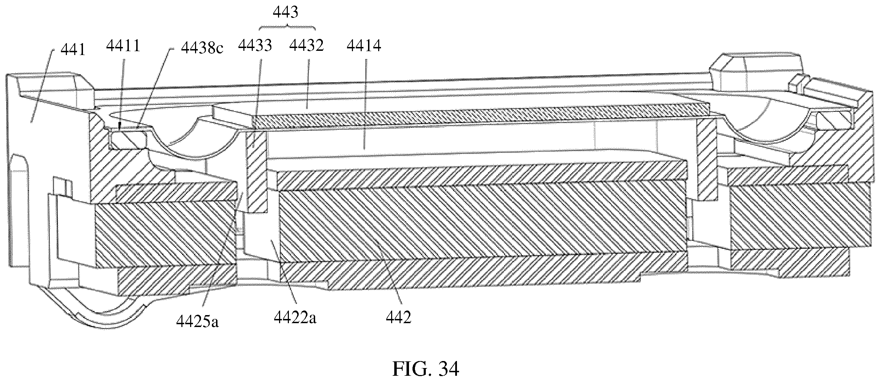

FIG. 34 is a schematic diagram of a structure of the speaker core 44 sectioned in an L-L direction in the speaker module 40 shown in FIG. 26.

The vibration assembly 443 is mounted on the bottom surface 4412 of the basin stand. Specifically, the second fastening part 4438c of the sound diaphragm 4432 is mounted on the bottom surface 4412 of the basin stand, and the second fastening part 4438c may be mounted on the bottom surface 4412 of the basin stand by bonding. In this case, the voice coil 4433 passes through the through hole 4414 of the basin stand, passes through the fourth gap 4425a, the fifth gap (not shown in the figure), and the sixth gap (not shown in the figure), and extends into the first gap 4422a, the second gap (not shown in the figure), and the third gap (not shown in the figure). The magnetic circuit assembly 442 provides a magnetic field for vibration of the voice coil 4433. When the voice coil 4433 receives an audio signal transmitted by the mainboard (not shown in the figure), the voice coil 4433 moves up and down to cut a magnetic line of the magnetic field, and drives the sound diaphragm 4432 to vibrate.

Refer to FIG. 25 again. The speaker core 44 is mounted on the first enclosure 41. Specifically, the speaker core 44 is mounted on a bottom surface 412 of the first enclosure 41, and a part of the vibration assembly 443 of the speaker core 44 extends into the accommodating groove 416. The second fastening part 4438c of the sound diaphragm 4432 in the vibration assembly 443 is mounted on the bottom surface 412 of the first enclosure 41, and the second fastening part 4438c of the sound diaphragm 4432 may be mounted on the bottom surface 412 of the first enclosure 41 by bonding. The front sound cavity 403 is formed between the first enclosure 41 and the sound diaphragm 4432. To be specific, the bottom wall 414, the first side wall 415, and the sound diaphragm 4432 jointly form the front sound cavity 403 through enclosing. The sound outlet hole 401 connects the front sound cavity 403 and the outside of the speaker module 40.

In this case, the dome 4437 of the sound diaphragm 4432 directly faces the groove 410, to increase vibration space between the dome 4437 and the first enclosure 41, so that the vibration space between the dome 4437 and the first enclosure 41 is fully used. A distance between the dome 4437 and a bottom wall surface 4101 of the groove 410 is greater than or equal to a distance between the surround part 4438b and the bottom wall surface 4141 of the bottom wall 414, so that when the vibration space between the dome 4437 and the first enclosure 41 is fully used, the vibration space between the surround portion 4438b of the diaphragm 4438 and the first enclosure 41 can also be fully used. This helps increase vibration amplitude of the sound diaphragm 4432, and improve audio performance of a sound made by the speaker module 40.

The speaker module 40 is installed in the overall inner cavity 102. Specifically, the first enclosure 41 of the speaker module 40 is mounted on the mounting surface 502 of the support 50, and the limiting frame 504 abuts against a circumferential surface of the speaker module 40, to assist in fastening the speaker module 40 and improve mounting stability of the speaker module 40 in the overall inner cavity 102. The first enclosure 41 of the speaker module 40 is partially accommodated in the assembly groove 503. A part that is on the first enclosure 41 and that forms the groove 410, that is, the protrusion part 4143, is accommodated in the assembly groove 503 of the support 50, and the assembly groove 503 connects the speaker hole 103 and the sound outlet hole 401. In this case, a rear sound cavity 404 is formed between the sound diaphragm 4432 and the rear cover 12.

In the electronic device 100 shown in this embodiment, the part that forms the groove 410 in the speaker module 40 is accommodated in the assembly groove 503 of the support 50, so that vibration space between the dome 4437 and the first enclosure 41 is increased in the limited overall inner cavity 102 without increasing a thickness of the electronic device 100. This helps increase vibration amplitude of the sound diaphragm 4432 and improve audio performance of the electronic device 100. In addition, in the electronic device 100 shown in this embodiment, the rear sound cavity 404 is formed between the sound diaphragm 4432 and the rear cover 12, so that a second enclosure of the speaker module 40 is omitted, and a volume of the speaker module 40 is reduced. This helps reduce a volume occupied by the speaker module 40 in the overall space 102 of the electronic device 100, helps reduce a thickness of the electronic device 100, and implements a thin and light design of the electronic device 100.

Embodiments of this application are described in detail above. The principle and implementation of this application are described herein through specific examples. The descriptions about embodiments are merely provided to help understand the method and core ideas of this application. In addition, a person of ordinary skill in the art can make variations and modifications to this application in terms of the specific implementations and application scopes according to the ideas of this application. Therefore, the content of this specification shall not be construed as a limit to this application.

## Claims

1. A speaker module (40), comprising a first enclosure (41), a speaker core (44), and a waterproof breathable film (43), wherein the first enclosure (41) is provided with an accommodating groove (411), the speaker core (44) is mounted on the accommodating groove (411), the speaker core (44) comprises a sound diaphragm (4432), a front sound cavity (403) is formed between the sound diaphragm (4432) and the first enclosure (41), a rear sound cavity (404) is on a side that is of the sound diaphragm (4432), and the side that is of the sound diaphragm (4432) is away from the front sound cavity (403);
the first enclosure (41) is further provided with a resonant groove (412), a bottom of the resonant groove (412) is provided with a communicating hole (413), the resonant groove (412) communicates with the front sound cavity (403) through the communicating hole (413), and the waterproof breathable film (43) covers an opening that is of the resonant groove (412) and that faces the rear sound cavity (404), to isolate the resonant groove (412) from the rear sound cavity (404); and
the first enclosure (41) is further provided with a groove (410), an opening of the groove (410) is located on a bottom wall surface of the accommodating groove (411);
**characterized in that**
the sound diaphragm (4432) comprises a dome (4437) and a diaphragm (4438) bearing the dome (4437), and the dome (4437) directly faces the groove (410);
the dome (4437) is in a rectangular plate shape; and
the diaphragm (4438) is in a rectangular ring shape.

2. The speaker module (40) according to claim 1, wherein a ratio of a volume of the resonant groove (412) to a volume of the communicating hole (413) is between 5 and 20.

3. The speaker module (40) according to claim 1 or 2, wherein air permeability of the waterproof breathable film (43) is between 100 ml/min and 200 ml/min.

4. The speaker module (40) according to claim 1, wherein an opening through which the communicating hole (413) communicates with the resonant groove (412) is partially located on a bottom wall surface of the resonant groove (412) and is partially located on a side wall surface of the resonant groove (412).

5. The speaker module (40) according to claim 1, wherein the diaphragm (4438) comprises a first fastening part (4438) bearing the dome (4437) and a surround part (4438b) connected to the first fastening part (4438a), and a distance between the dome (4437) and a bottom wall surface of the groove (410) is greater than or equal to a distance between the surround part (4438b) and the bottom wall surface of the accommodating groove (411).

6. The speaker module (40) according to claim 1 or 5, wherein the first enclosure (41) is further provided with a sound outlet hole (401), an opening of the sound outlet hole (402) is located on the bottom wall surface of the groove (410), and the sound outlet hole (401) connects the front sound cavity (403) and the outside of the speaker module (40).

7. The speaker module (40) according to any one of claims 1 to 6, wherein the speaker module (40) further comprises a second enclosure (42), the second enclosure (42) covers the first enclosure (41), the speaker core (44) is located between the first enclosure (41) and the second enclosure (42), and the rear sound cavity (404) is formed between the sound diaphragm (4432) and the second enclosure (42).

8. An electronic device (100), comprising a housing (110) and the speaker module (40) according to any one of claims 1 to 7, wherein the speaker module (40) is accommodated in the housing (110).

9. The electronic device (100) according to claim 8, wherein the housing (110) comprises a mounting surface (121), the housing (110) is provided with a mounting groove (122), an opening of the mounting groove (122) is located on the mounting surface (121), and the first enclosure (41) is partially accommodated in the mounting surface (121).

10. The electronic device (100) according to claim 8, wherein the electronic device (100) further comprises a support (50), the support (50) is accommodated in the housing (110), the support (50) comprises an assembly surface (501), the support (50) is provided with an assembly groove (503), an opening of the assembly groove (503) is located on the assembly surface (501), and the first enclosure (41) is partially accommodated in the assembly groove (503).

11. The electronic device according to claim 10, wherein the assembly surface (501) partially protrudes to form a limiting frame (504), and the limiting frame (504) is disposed around the assembly groove (503) and abuts against a circumferential surface of the speaker module (40).

## Patentansprüche

1. Lautsprechermodul (40), das eine erste Umhausung (41), einen Lautsprecherkern (44) und eine wasserdichte, atmungsaktive Folie (43) umfasst, wobei die erste Umhausung (41) mit einer Aufnahmenut (411) versehen ist, der Lautsprecherkern (44) an der Aufnahmenut (411) angebracht ist, der Lautsprecherkern (44) eine Schallmembran (4432) umfasst, ein vorderer Schallhohlraum (403) zwischen der Schallmembran (4432) und der ersten Umhausung (41) ausgebildet ist, ein hinterer Schallhohlraum (404) auf einer Seite der Schallmembran (4432) liegt und die Seite der Schallmembran (4432) vom vorderen Schallhohlraum (403) abliegend ist;
die erste Umhausung (41) ferner mit einer Resonanznut (412) versehen ist, ein Boden der Resonanznut (412) mit einem Verbindungsloch (413) versehen ist, die Resonanznut (412) über das Verbindungsloch (413) mit dem vorderen Schallhohlraum (403) in Verbindung steht und die wasserdichte, atmungsaktive Folie (43) eine dem hinteren Schallhohlraum (404) zugewandte Öffnung der Resonanznut (412) bedeckt, um die Resonanznut (412) vom hinteren Schallhohlraum (404) zu isolieren; und
die erste Umhausung (41) ferner mit einer Nut (410) versehen ist, wobei sich eine Öffnung der Nut (410) an einer Bodenwandfläche der Aufnahmenut (411) befindet;
**dadurch gekennzeichnet, dass**
die Schallmembran (4432) eine Kuppel (4437) und eine die Kuppel (4437) tragende Membran (4438) umfasst und die Kuppel (4437) der Nut (410) direkt zugewandt ist;
die Kuppel (4437) die Form einer rechteckigen Platte aufweist; und
die Membran (4438) die Form eines rechteckigen Rings aufweist.

2. Lautsprechermodul (40) nach Anspruch 1, wobei ein Verhältnis eines Volumens der Resonanznut (412) zu einem Volumen des Verbindungslochs (413) zwischen 5 und 20 liegt.

3. Lautsprechermodul (40) nach Anspruch 1 oder 2, wobei die Luftdurchlässigkeit der wasserdichten, atmungsaktiven Folie (43) zwischen 100 ml/min und 200 ml/min beträgt.

4. Lautsprechermodul (40) nach Anspruch 1, wobei sich eine Öffnung, durch die das Verbindungsloch (413) mit der Resonanznut (412) in Verbindung steht, teilweise in einer Bodenwandfläche der Resonanznut (412) und teilweise in einer Seitenwandfläche der Resonanznut (412) befindet.

5. Lautsprechermodul (40) nach Anspruch 1, wobei die Membran (4438) einen die Kuppel (4437) tragenden ersten Befestigungsteil (4438) und einen mit dem ersten Befestigungsteil (4438a) verbundener Umgebungsteil (4438b) umfasst und ein Abstand zwischen der Kuppel (4437) und einer Bodenwandfläche der Nut (410) größer oder gleich einem Abstand zwischen dem Umgebungsteil (4438b) und der Bodenwandfläche der Aufnahmenut (411) ist.

6. Lautsprechermodul (40) nach Anspruch 1 oder 5, wobei die erste Umhausung (41) ferner mit einer Schallaustrittsöffnung (401) versehen ist, sich eine Öffnung der Schallaustrittsöffnung (402) in der Bodenwandfläche der Nut (410) befindet und die Schallaustrittsöffnung (401) den vorderen Schallhohlraum (403) und die Außenumgebung des Lautsprechermoduls (40) verbindet.

7. Lautsprechermodul (40) nach einem der Ansprüche 1 bis 6, wobei das Lautsprechermodul (40) ferner eine zweite Umhausung (42) umfasst, die zweite Umhausung (42) die erste Umhausung (41) abdeckt, sich der Lautsprecherkern (44) zwischen der ersten Umhausung (41) und der zweiten Umhausung (42) befindet und der hintere Schallhohlraum (404) zwischen der Schallmembran (4432) und der zweiten Umhausung (42) ausgebildet ist.

8. Elektronisches Gerät (100), umfassend ein Gehäuse (110) und das Lautsprechermodul (40) nach einem der Ansprüche 1 bis 7, wobei das Lautsprechermodul (40) im Gehäuse (110) aufgenommen ist.

9. Elektronisches Gerät (100) nach Anspruch 8, wobei das Gehäuse (110) eine Einbaufläche (121) umfasst, die Umhausung (110) mit einer Einbaunut (122) versehen ist, eine Öffnung der Einbaunut (122) sich in der Einbaufläche (121) befindet und die erste Umhausung (41) teilweise in die Einbaufläche (121) aufgenommen ist.

10. Elektronisches Gerät (100) nach Anspruch 8, wobei das elektronische Gerät (100) ferner eine Trägerfläche (50) umfasst, die Trägerfläche (50) in dem Gehäuse (110) aufgenommen ist, die Trägerfläche (50) eine Montagefläche (501) umfasst, die Trägerfläche (50) mit einer Montagenut (503) versehen ist, eine Öffnung der Montagenut (503) in der Montagefläche (501) angeordnet ist und die erste Umhausung (41) teilweise in der Montagenut (503) aufgenommen ist.

11. Elektronisches Gerät nach Anspruch 10, wobei die Montagefläche (501) teilweise derart vorsteht, dass sie einen Eingrenzungsrahmen (504) bildet und der Eingrenzungsrahmen (504) um die Montagenut (503) herum angeordnet ist und an einer Umfangsfläche des Lautsprechermoduls (40) anliegt.

## Revendications

1. Module de haut-parleur (40), comprenant une première enceinte (41), un noyau de haut-parleur (44) et un film imperméable et respirant (43), dans lequel la première enceinte (41) est pourvue d'une rainure de réception (411), le noyau de haut-parleur (44) est monté sur la rainure de réception (411), le noyau de haut-parleur (44) comprend un diaphragme sonore (4432), une cavité sonore avant (403) est formée entre le diaphragme sonore (4432) et la première enceinte (41), une cavité sonore arrière (404) se trouve sur un côté qui est du diaphragme sonore (4432), et le côté qui est du diaphragme sonore (4432) est éloigné de la cavité sonore avant (403) ;
la première enceinte (41) est en outre pourvue d'une rainure résonante (412), un fond de la rainure résonante (412) est pourvu d'un trou de communication (413), la rainure résonante (412) communique avec la cavité sonore avant (403) à travers le trou de communication (413), et le film imperméable et respirant (43) recouvre une ouverture qui est celle de la rainure résonante (412) et qui fait face à la cavité sonore arrière (404), pour isoler la rainure résonante (412) de la cavité sonore arrière (404) ; et
la première enceinte (41) est en outre pourvue d'une rainure (410), une ouverture de la rainure (410) est située sur une surface de paroi inférieure de la rainure de réception (411) ;
**caractérisé en ce que**
le diaphragme sonore (4432) comprend un dôme (4437) et un diaphragme (4438) portant le dôme (4437), et le dôme (4437) fait directement face à la rainure (410) ;
le dôme (4437) est sous une forme de plaque rectangulaire ; et
le diaphragme (4438) est sous une forme d'anneau rectangulaire.

2. Module de haut-parleur (40) selon la revendication 1, dans lequel le rapport d'un volume de la rainure résonante (412) à un volume du trou communicant (413) est compris entre 5 et 20.

3. Module de haut-parleur (40) selon la revendication 1 ou 2, dans lequel la perméabilité à l'air du film imperméable et respirant (43) est comprise entre 100 ml/min et 200 ml/min.

4. Module de haut-parleur (40) selon la revendication 1, dans lequel une ouverture à travers laquelle le trou de communication (413) communique avec la rainure résonante (412) est partiellement située sur une surface de paroi inférieure de la rainure résonante (412) et est partiellement située sur une surface de paroi latérale de la rainure résonante (412).

5. Module de haut-parleur (40) selon la revendication 1, dans lequel le diaphragme (4438) comprend une première partie de fixation (4438) portant le dôme (4437) et une partie d'entourage (4438b) connectée à la première partie de fixation (4438a), et une distance entre le dôme (4437) et une surface de paroi inférieure de la rainure (410) est supérieure ou égale à une distance entre la partie d'entourage (4438b) et la surface de paroi inférieure de la rainure de réception (411).

6. Module de haut-parleur (40) selon la revendication 1 ou 5, dans lequel la première enceinte (41) est en outre pourvue d'un trou de sortie sonore (401), une ouverture du trou de sortie sonore (402) est située sur la surface de paroi inférieure de la rainure (410), et le trou de sortie sonore (401) connecte la cavité sonore avant (403) et l'extérieur du module de haut-parleur (40) .

7. Module de haut-parleur (40) selon l'une quelconque des revendications 1 à 6, dans lequel le module de haut-parleur (40) comprend également une seconde enceinte (42), la seconde enceinte (42) recouvre la première enceinte (41), le noyau de haut-parleur (44) est situé entre la première enceinte (41) et la seconde enceinte (42), et la cavité sonore arrière (404) est formée entre le diaphragme sonore (4432) et la seconde enceinte (42) .

8. Dispositif électronique (100), comprenant un boîtier (110) et le module de haut-parleur (40) selon l'une quelconque des revendications 1 à 7, dans lequel le module de haut-parleur (40) est logé dans le boîtier (110).

9. Dispositif électronique (100) selon la revendication 8, dans lequel le boîtier (110) comprend une surface de montage (121), le boîtier (110) est pourvu d'une rainure de montage (122), une ouverture de la rainure de montage (122) est située sur la surface de montage (121), et la première enceinte (41) est partiellement logée dans la surface de montage (121).

10. Dispositif électronique (100) selon la revendication 8, dans lequel le dispositif électronique (100) comprend également un support (50), le support (50) est logé dans le boîtier (110), le support (50) comprend une surface d'assemblage (501), le support (50) est pourvu d'une rainure d'assemblage (503), une ouverture de la rainure d'assemblage (503) est située sur la surface d'assemblage (501), et la première enceinte (41) est partiellement logée dans la rainure d'assemblage (503).

11. Dispositif électronique selon la revendication 10, dans lequel la surface d'assemblage (501) fait partiellement saillie pour former un cadre de limitation (504), et le cadre de limitation (504) est disposé autour de la rainure d'assemblage (503) et vient en butée contre une surface circonférentielle du module de haut-parleur (40).
